# EUROPEAN PATENT SPECIFICATION

(11) **EP 3 376 393 B1**
(45) Date of publication and mention of the grant of the patent: **17.02.2021**
(21) Application number: 15910007.2
(22) Date of filing: 08.12.2015
(51) Int. Cl.: G06F 12/00, G06F 3/06

(54) **DATA STORAGE METHOD AND APPARATUS**
DATENSPEICHERVERFAHREN UND -VORRICHTUNG
PROCÉDÉ ET APPAREIL DE STOCKAGE DE DONNÉES

(43) Date of publication of application: 19.09.2018
(73) Proprietor: Huawei Technologies Co., Ltd., Longgang District Shenzhen, Guangdong 518129 (CN)
(72) Inventor: LI, Fulu, Shenzhen Guangdong 518129 (CN); ZHANG, Chengwei, Shenzhen Guangdong 518129 (CN); XU, Pei, Shenzhen Guangdong 518129 (CN)
(74) Representative: Goddar, Heinz J.
(86) International application number: PCT/CN2015/096696
(87) International publication number: WO 2017/096532

(56) References cited:
- CN-A- 101 039 374
- CN-A- 101 796 492
- CN-A- 102 592 682
- CN-A- 103 955 355
- US-A1- 2005 060 643
- US-A1- 2015 205 716

## Description

### TECHNICAL FIELD

Examples of the present invention relate to the field of computers, and in particular, to a data storage method and apparatus.

### BACKGROUND

With an explosive increase of an amount of digital information, data occupies increasingly large space. As data exponentially increases, an enterprise faces ever-increasing time points for fast backup and recovery. Consequently, costs of managing stored data become increasingly high, more data center space is to be occupied, and energy consumption becomes increasingly large. It is found through research that up to 60% of data stored in an application system is redundant, and as time goes by, there is an increasingly large data redundancy ratio.

To alleviate a space increase problem in a storage system, reduce data occupation space and costs, and fully use an existing resource, a data deduplication technology becomes a hot research topic. Utilization of storage space may be optimized by using the data deduplication technology (referred to as "deduplication" below), to eliminate a duplicate file or data block distributed in the storage system. In addition, an amount of data transmitted in a network may be reduced by using the data deduplication technology, so that energy consumption and network costs are reduced, and a large amount of network bandwidth is saved for data replication.

With development of the data deduplication technology, the technology is widely applied to storage backup and filing systems. A data deduplication module in the systems is responsible for comparing and analyzing data content, and finding redundant data. For data that repeatedly appears, only a location of stored duplicate data that can be used for reference needs to be recorded, and finally only data that does not repeatedly appear is stored in a storage medium.

In the prior art, all deduplication algorithms with a relatively good compression effect have a relatively large calculation amount, and deduplication algorithms with a small calculation amount have a relatively poor compression effect. It is found through research that there is a relatively high similarity between data blocks in a database application. Therefore, a valid storage algorithm is required to compress data in the database application.

US 2015/205716 A1 discloses a storage device which includes a nonvolatile memory device configured to store a plurality of reference data, a memory configured to store a hash manage table used to manage a plurality of reference hash keys of each of the plurality of reference data, a hash key generator configured to generate a plurality of hash keys based on write requested data, and a memory controller configured to compare the plurality of hash keys and reference hash keys of each reference data to determine whether to store the write requested data in the nonvolatile memory device. The memory controller selects one of the plurality of reference data according to a similarity between the plurality of hash keys and the plurality of reference hash keys of each reference data and stores the write requested data and the selected reference data in the nonvolatile memory device to refer to each other.

### SUMMARY

In view of this, examples of the present invention provide a data storage method and apparatus, so as to deduplicate and compress a to-be-stored data block, and reduce storage space required for storing the to-be-stored data block.

According to a first aspect, this application provides a data storage method, including:
dividing a to-be-stored data block into N equal-sized to-be-stored sub-data blocks, where the N to-be-stored sub-data blocks are corresponding to N location identifiers, each to-be-stored sub-data block is corresponding to one location identifier, and N is a positive integer greater than 1; selecting one of at least two stored comparison data blocks as a reference data block, where the reference data block includes N reference sub-data blocks, the N reference sub-data blocks are corresponding to the N location identifiers, and each reference sub-data block is corresponding to one location identifier; comparing a to-be-stored sub-data block corresponding to an i^{th} location identifier and a reference sub-data block corresponding to the i^{th} location identifier, and determining one or more first sub-data blocks in the N to-be-stored sub-data blocks, where i is a positive integer progressively increasing from 1 to N, and the first sub-data blocks are to-be-stored sub-data blocks different from a compared reference sub-data block; selecting a representative sub-data block of the first sub-data blocks; performing an exclusive OR operation on data of the first sub-data blocks and data of the representative sub-data block; and compressing a result of the exclusive OR operation, and storing a compression result and location information of each of the first sub-data blocks, characterized in that the compressing a result of the exclusive OR operation is implemented by means of run-length encoding, and the selecting a representative sub-data block of the first sub-data blocks includes: performing an exclusive OR operation on every two first sub-data blocks, and selecting a first sub-data block as the representative sub-data block according to run-length encoding compression ratios of results of the exclusive OR operations, where a result of exclusive OR performed on the first sub-data block and another first sub-data block has a smallest run-length encoding compression ratio; and storing the representative sub-data block,
wherein the to-be-stored data block has M first sub-data blocks, wherein the M first sub-data blocks are numbered from 1 to M according to a location sequence in the to-be-stored data block, and an exclusive OR operation is separately performed on every two of the M first sub-data blocks,
wherein in the run-length encoding, compression encoding is performed by recording a character that continuously appears and a quantity of times that the character continuously appears, and wherein a run-length encoding compression ratio of a result of exclusive OR performed on each first sub-data block and another first sub-data block is determined by calculating a size of compression space generated by performing run-length encoding on the character that continuously appears in the exclusive OR result.

In a specific implementation process, because the to-be-stored data block and the reference data block have a same size, the to-be-stored sub-data block and the reference sub-data block also have a same size, and a ranking of a sub-data block in a data block may be used as the location identifier. For example, according to a location sequence, a location identifier of an i^{th} to-be-stored sub-data block is "i". A to-be-stored sub-data block and a reference sub-data block that are corresponding to a same location identifier are compared, that is, a to-be-stored sub-data block and a reference sub-data block that are at a same location are compared.

With reference to the first aspect, in a first possible implementation of the first aspect, the method further includes: determining a second sub-data block in the N to-be-stored sub-data blocks by comparing a to-be-stored sub-data block and a reference sub-data block that are corresponding to a same location identifier, where the second sub-data block is a to-be-stored sub-data block the same as a compared reference sub-data block; and performing a deduplication operation on the second sub-data block.

According to features of data similarity and location correlation in a database, a to-be-stored data block is divided into sub-data blocks of a smaller granularity, sub-data blocks that are of the to-be-stored data block and a reference data block and that are at a same location are compared, a deduplication operation is performed on same sub-data blocks with a relatively small calculation amount, an exclusive OR operation is performed on a sub-data block and a reference sub-data block that are different from each other, and run-length encoding compression is performed on an exclusive OR result. Therefore, storage space required for recording the to-be-stored data block is greatly reduced.

With reference to any one of the first aspect or the foregoing possible implementation of the first aspect, in a second possible implementation of the first aspect, the comparing a to-be-stored sub-data block corresponding to an i^{th} location identifier and a reference sub-data block corresponding to the i^{th} location identifier includes: comparing a fingerprint of the to-be-stored sub-data block corresponding to the i^{th} location identifier and a fingerprint of the reference sub-data block corresponding to the i^{th} location identifier, where if the fingerprints are the same, it indicates that the to-be-stored sub-data block is the same as the reference sub-data block, or if the fingerprints are different, it indicates that the to-be-stored sub-data block is different from the reference sub-data block.

Fingerprints of sub-data blocks are compared, thereby avoiding comparison performed on a bit basis when the sub-data blocks are compared. Therefore, comparison operation complexity is reduced.

With reference to any one of the first aspect or the foregoing possible implementations of the first aspect, in a third possible implementation of the first aspect, the selecting one of at least two stored comparison data blocks as a reference data block includes: selecting, from the at least two comparison data blocks as the reference data block, a comparison data block that has a largest quantity of sub-data blocks the same as those in the to-be-stored data block. Further, a comparison data block that has a largest quantity of sub-data blocks the same as those in the to-be-stored data block and that has a smallest quantity of clusters of different sub-data blocks may be selected as the reference data block. A cluster of different sub-data blocks is a set of different sub-data blocks that are continuous in locations, and sub-data blocks at adjacent locations of the set are same sub-data blocks.

The to-be-stored data block is compared with multiple comparison data blocks, so that a similarity between each comparison data block and the to-be-stored data block can be determined. A comparison data block that has a largest quantity of sub-data blocks the same as those in the to-be-stored data block is a data block that has a highest similarity with the to-be-stored data block. Further, a comparison data block that has a smallest quantity of clusters of different sub-data blocks is selected as the reference data block from comparison data blocks that have a highest similarity with the to-be-stored data block, so that information required for recording locations of different sub-data blocks can be reduced, and a deduplication operation compression ratio is further increased.

With reference to any one of the first aspect or the foregoing possible implementations of the first aspect, in a fourth possible implementation of the first aspect, the selecting a representative sub-data block of the first sub-data block includes: selecting a reference sub-data block that is corresponding to a location identifier that is corresponding to each first sub-data block as the representative sub-data block of the first sub-data block.

Data blocks stored in a database have a higher similarity with each other, and a same part of different data blocks generally has a same relative location in the data blocks. Therefore, the reference sub-data block that is corresponding to the location identifier that is corresponding to each first sub-data block is selected as the representative sub-data block of the first sub-data block, so that a large quantity of continuous "0s" can appear in an exclusive OR result, and a run-length encoding compression ratio is greatly reduced.

With reference to any one of the first aspect or the foregoing possible implementations of the first aspect, in a fifth possible implementation of the first aspect, the selecting a representative sub-data block of the first sub-data block includes: separately performing an exclusive OR operation on the first sub-data block and at least two stored sub-data blocks, and selecting a stored sub-data block as the representative sub-data block according to run-length encoding compression ratios of results of the exclusive OR operations, where a result of exclusive OR performed on the stored sub-data block and the first sub-data block has a smallest run-length encoding compression ratio.

The stored sub-data block is selected as the representative sub-data block from stored sub-data blocks by means of comparison, where a result of an exclusive OR operation performed on the first sub-data block and the stored sub-data block has the smallest run-length encoding compression ratio, so that storage space required for storing the to-be-stored data block can be reduced to a relatively large extent.

With reference to any one of the first aspect or the foregoing possible implementations of the first aspect, in a sixth possible implementation of the first aspect, the selecting a representative sub-data block of the first sub-data block includes: performing an exclusive OR operation on every two first sub-data blocks, and selecting a first sub-data block as the representative sub-data block according to run-length encoding compression ratios of results of the exclusive OR operations, where a result of exclusive OR performed on the first sub-data block and another first sub-data block has a smallest run-length encoding compression ratio.

The first sub-data blocks are searched for the first sub-data block that has a highest similarity with the another first sub-data block, and the first sub-data block is used as the representative sub-data block, so that storage space required for storing the to-be-stored data block can be reduced without depending on stored sub-data blocks.

With reference to any one of the first aspect or the foregoing possible implementations of the first aspect, in a seventh possible implementation of the first aspect, before the dividing a to-be-stored data block into N equal-sized to-be-stored sub-data blocks, the method further includes: extracting a sample from to-be-stored data, separately determining a storage compression ratio, a storage speed, and a read speed of the sample according to different to-be-stored sub-data block sizes, and determining a value of N according to a size of a sub-data block with a smallest storage compression ratio if the storage speed and the read speed meet a constraint condition, where the constraint condition is that the storage speed is greater than or equal to a preset first threshold, and the read speed is greater than or equal to a preset second threshold.

A most proper data block division method is selected by extracting the sample, so that storage space required for storing the to-be-stored data block can be reduced to a greatest extent when the storage processing speed and the read processing speed are met a constraint condition.

With reference to any one of the first aspect or the foregoing possible implementations of the first aspect, in an eighth possible implementation of the first aspect, the method further includes: storing a fingerprint of the first sub-data block. Therefore, when the first sub-data block is subsequently used as a reference sub-data block of another data block, there is no need to repeatedly calculate the fingerprint.

According to a second aspect, this application provides a data storage apparatus, including:
a division unit, configured to divide a to-be-stored data block into N equal-sized to-be-stored sub-data blocks, where the N to-be-stored sub-data blocks are corresponding to N location identifiers, each to-be-stored sub-data block is corresponding to one location identifier, and N is a positive integer greater than 1; a selection unit, configured to select one of at least two stored comparison data blocks as a reference data block, where the reference data block includes N reference sub-data blocks, the N reference sub-data blocks are corresponding to the N location identifiers, and each reference sub-data block is corresponding to one location identifier; a comparison unit, configured to: compare a to-be-stored sub-data block corresponding to an i^{th} location identifier and a reference sub-data block corresponding to the i^{th} location identifier, and determine one or more first sub-data blocks in the N to-be-stored sub-data blocks, where i is a positive integer progressively increasing from 1 to N, and the first sub-data blocks are to-be-stored sub-data blocks different from a compared reference sub-data block, where the selection unit is further configured to select a representative sub-data block of the first sub-data blocks; a calculation unit, configured to perform an exclusive OR operation on data of the first sub-data block and data of the representative sub-data blocks; and a compression unit, configured to: compress a result of the exclusive OR operation, and store a compression result and location information of each of the first sub-data blocks, characterized in that the compressing a result of the exclusive OR operation is implemented by means of run-length encoding, and that the selection unit is configured to select a representative sub-data block of the first sub-data blocks includes: the selection unit is configured to: perform an exclusive OR operation on every two first sub-data blocks by using an exclusive OR unit, and select a first sub-data block as the representative sub-data block according to run-length encoding compression ratios of results of the exclusive OR operations, where a result of exclusive OR performed on the first sub-data block and another first sub-data block has a smallest run-length encoding compression ratio,
wherein the to-be-stored data block has M first sub-data blocks, wherein the M first sub-data blocks are numbered from 1 to M according to a location sequence in the to-be-stored data block, and an exclusive OR operation is separately performed on every two of the M first sub-data blocks,
wherein in the run-length encoding, compression encoding is performed by recording a character that continuously appears and a quantity of times that the character continuously appears, and wherein a run-length encoding compression ratio of a result of exclusive OR performed on each first sub-data block and another first sub-data block is determined by calculating a size of compression space generated by performing run-length encoding on the character that continuously appears in the exclusive OR result.

In a specific implementation process, because the to-be-stored data block and the reference data block have a same size, the to-be-stored sub-data block and the reference sub-data block also have a same size, and a ranking of a sub-data block in a data block may be used as the location identifier. For example, according to a location sequence, a location identifier of an i^{th} to-be-stored sub-data block is "i". A to-be-stored sub-data block and a reference sub-data block that are corresponding to a same location identifier are compared, that is, a to-be-stored sub-data block and a reference sub-data block that are at a same location are compared.

With reference to the second aspect, in a first possible implementation of the second aspect, the apparatus further includes a deduplication unit; the comparison unit is further configured to determine a second sub-data block in the N to-be-stored sub-data blocks, where the second sub-data block is a to-be-stored sub-data block the same as a compared reference sub-data block; and the deduplication unit is configured to perform a deduplication operation on the second sub-data block.

According to features of data similarity and location correlation in a database, a to-be-stored data block is divided into sub-data blocks of a smaller granularity, sub-data blocks that are of the to-be-stored data block and a reference data block and that are at a same location are compared, a deduplication operation is performed on same sub-data blocks with a relatively small calculation amount, an exclusive OR operation is performed on a sub-data block and a reference sub-data block that are different from each other, and run-length encoding compression is performed on an exclusive OR result. Therefore, storage space required for recording the to-be-stored data block is greatly reduced.

With reference to any one of the second aspect or the foregoing possible implementation of the second aspect, in a second possible implementation of the second aspect, the comparison unit is specifically configured to compare a fingerprint of the to-be-stored sub-data block corresponding to the i^{th} location identifier and a fingerprint of the reference sub-data block corresponding to the i^{th} location identifier, where if the fingerprints are the same, it indicates that the to-be-stored sub-data block is the same as the reference sub-data block, or if the fingerprints are different, it indicates that the to-be-stored sub-data block is different from the reference sub-data block.

Fingerprints of sub-data blocks are compared, thereby avoiding comparison performed on a bit basis when the sub-data blocks are compared. Therefore, comparison operation complexity is reduced.

With reference to any one of the second aspect or the foregoing possible implementations of the second aspect, in a third possible implementation of the second aspect, that the selection unit is configured to select one of at least two stored comparison data blocks as a reference data block includes: the selection unit is configured to select, from the at least two comparison data blocks as the reference data block, a comparison data block that has a largest quantity of sub-data blocks the same as those in the to-be-stored data block.

The to-be-stored data block is compared with multiple comparison data blocks, so that a similarity between each comparison data block and the to-be-stored data block can be determined. A comparison data block that has a largest quantity of sub-data blocks the same as those in the to-be-stored data block is a data block that has a highest similarity with the to-be-stored data block. Further, a comparison data block that has a smallest quantity of clusters of different sub-data blocks is selected as the reference data block from comparison data blocks that have a highest similarity with the to-be-stored data block, so that information required for recording locations of different sub-data blocks can be reduced, and a deduplication operation compression ratio is further increased.

With reference to any one of the second aspect or the foregoing possible implementations of the second aspect, in a fourth possible implementation of the second aspect, that the selection unit is configured to select a representative sub-data block of the first sub-data block includes: the selection unit is configured to select a reference sub-data block that is corresponding to a location identifier that is corresponding to each first sub-data block as the representative sub-data block of the first sub-data block. Further, the selection unit may be configured to select a comparison data block that has a largest quantity of sub-data blocks the same as those in the to-be-stored data block and that has a smallest quantity of clusters of different sub-data blocks as the reference data block. A cluster of different sub-data blocks is a set of different sub-data blocks that are continuous in locations, and sub-data blocks at adjacent locations of the set are same sub-data blocks.

Data blocks stored in a database have a higher similarity with each other, and a same part of different data blocks generally has a same relative location in the data blocks. Therefore, the reference sub-data block that is corresponding to the location identifier that is corresponding to each first sub-data block is selected as the representative sub-data block of the first sub-data block, so that a large quantity of continuous "0s" can appear in an exclusive OR result, and a run-length encoding compression ratio is greatly reduced.

With reference to any one of the second aspect or the foregoing possible implementations of the second aspect, in a fifth possible implementation of the second aspect, that the selection unit is configured to select a representative sub-data block of the first sub-data block includes: the selection unit is configured to: separately perform an exclusive OR operation on the first sub-data block and at least two stored sub-data blocks by using an exclusive OR unit, and select a stored sub-data block as the representative sub-data block according to run-length encoding compression ratios of results of the exclusive OR operations, where a result of exclusive OR performed on the stored sub-data block and the first sub-data block has a smallest run-length encoding compression ratio.

The stored sub-data block is selected as the representative sub-data block from stored sub-data blocks by means of comparison, where a result of an exclusive OR operation performed on the first sub-data block and the stored sub-data block has the smallest run-length encoding compression ratio, so that storage space required for storing the to-be-stored data block can be reduced to a relatively large extent.

With reference to any one of the second aspect or the foregoing possible implementations of the second aspect, in a sixth possible implementation of the seocond aspect, the selection unit is further configured to: extract a sample from to-be-stored data, separately determine a storage compression ratio, a storage speed, and a read speed of the sample according to different to-be-stored sub-data block sizes, and determine a value of N according to a size of a sub-data block with a smallest storage compression ratio if the storage speed and the read speed meet a constraint condition, where the constraint condition is that the storage speed is greater than or equal to a preset first threshold, and the read speed is greater than or equal to a preset second threshold.

A most proper data block division method is selected by extracting the sample, so that storage space required for storing the to-be-stored data block can be reduced to a greatest extent when the storage processing speed and the read processing speed are met.

According to a third aspect, this application provides a computer readable medium, including a computer-executable instruction, where when a processor of a computer executes the computer-executable instruction, the computer executes the method in any one of the first aspect or the possible implementations of the first aspect.

According to the technical solutions disclosed in the present invention, according to features of data similarity and location correlation in a database, a to-be-stored data block is divided into sub-data blocks of a smaller granularity, sub-data blocks that are of the to-be-stored data block and a reference data block and that are at a same location are compared, a deduplication operation is performed on same sub-data blocks with a relatively small calculation amount, an exclusive OR operation is performed on a sub-data block and a reference sub-data block that are different from each other, and run-length encoding compression is performed on an exclusive OR result. Therefore, storage space required for recording the to-be-stored data block is greatly reduced.

### BRIEF DESCRIPTION OF DRAWINGS

To describe the technical solutions in the examples of the present invention more clearly, the following briefly describes the accompanying drawings required for describing the embodiments. Apparently, the accompanying drawings in the following description show merely some examples of the present invention, and persons of ordinary skill in the art may still derive other drawings from these accompanying drawings without creative efforts.
FIG. 1 is a block diagram of an example of a networking environment of a data storage system;
FIG. 2 is a schematic diagram of a hardware structure of a computing device according to an example of the present invention;
FIG. 3 is an example flowchart of a data storage method according to an example of the present invention;
FIG. 4 is a schematic diagram of a data block division method according to an example of the present invention;
FIG. 5 is a schematic diagram showing comparison between comparison data blocks according to an example of the present invention; and
FIG. 6 is a schematic diagram of a logical structure of a data storage apparatus according to an example of the present invention.

### DESCRIPTION OF EMBODIMENTS

The following describes the technical solutions in the examples of the present invention with reference to the accompanying drawings in the examples of the present invention.

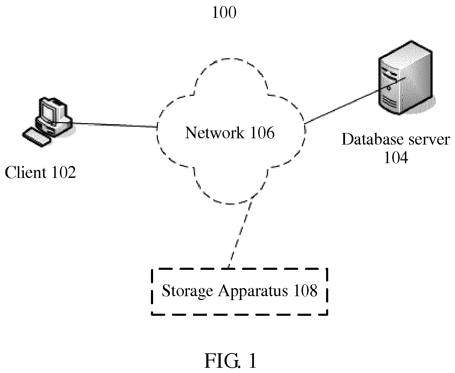

According to this application, a storage device of a database server stores data information to be used by a client, and data to be stored on the storage device of the database server may be or may not be deduplicated and compressed. However, storage space that is required by the to-be-stored data for being on the storage device of the database server can be greatly reduced by means of deduplication and compression, and storage resources can be saved. FIG. 1 is a block diagram of an example of a networking environment of a data storage system 100. The data storage system 100 includes a client 102 and a database server 104, and may further include a storage apparatus 108. It should be understood that the foregoing names are merely for ease of description, and shall not constitute any limitation on the present invention.

A storage device of the database server 104 stores data to be used by the client 102, to provide services for an application of the client 102. These services may be storage, query, update, transaction management, index, cache, query optimization, security control, multi-user access control, and the like. The database server 104 may include one or more computers and database management system software.

A communications interface used for mutual communication is configured for each of the database server 104 and the client 102. Optionally, the database server 104 communicates with the client 102 by using a network 106.

The network 106 may be the Internet, an intranet, a local area network (Local Area Network, LAN for short), a wide area network (wide area network, WAN for short), a storage area network (Storage Area Network, SAN for short), or the like, or a combination of the foregoing networks.

The storage apparatus 108 may be coupled to the database server 104 and/or the client 102 by using the communications interface, or may be coupled to the database server 104 and/or the client 102 by using the network 106. Either or both of the database server 104 and the client 102 may access the storage apparatus 108. Optionally, the storage apparatus 108 may serve as a storage device of the database server 104 to store data deduplicated and compressed by the database server 104.

It should be understood that FIG. 1 is merely intended to introduce an example of participants of the data storage system 100 and a correlation between the participants. Therefore, the described system 100 is greatly simplified. In this example of the present invention, the system 100 is merely described in general, and an implementation of the system 100 is not limited. In addition, the client 102 and the database server 104 in FIG. 1 may be of any architecture. This is not limited in this example of the present invention.

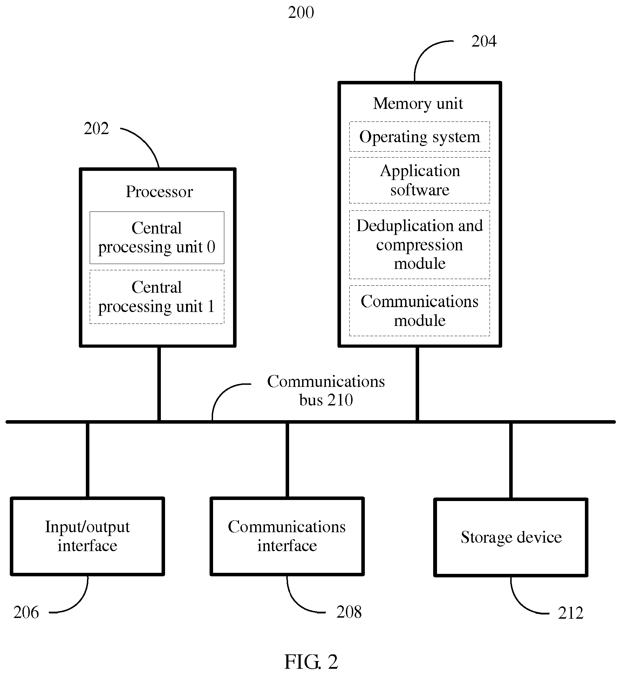

The client 102 and/or the database server 104 shown in FIG. 1 may be implemented by a computing device 200 shown in FIG. 2.

FIG. 2 is a schematic diagram of a simplified logical structure of the computing device 200. As shown in FIG. 2, the computing device 200 includes a processor 202, a memory unit 204, an input/output interface 206, a communications interface 208, a bus 210, and a storage device 212. The processor 202, the memory unit 204, the input/output interface 206, the communications interface 208, and the storage device 212 implement mutual communication connection by using the bus 210.

The processor 202 is a control center of the computing device 200, and is configured to execute a related program to implement a technical solution provided in this example of the present invention. Optionally, the processor 202 includes one or more central processing units (Central Processing Unit, CPU), for example, a central processing unit 0 and a central processing unit 1 shown in FIG. 2. Optionally, the computing device 200 may include multiple processors 202. Each processor 202 may be a single-core processor (including one CPU) or a multi-core processor (including multiple CPUs). Unless otherwise stated, in the present invention, a component configured to execute a specific function, for example, the processor 202 or the memory unit 204, may be implemented by configuring a general-purpose component to execute the corresponding function, or may be implemented by a dedicated component that specially executes the specific function. This is not limited in this application. The processor 202 may be a general-purpose central processing unit, a microprocessor, an application-specific integrated circuit (Application Specific Integrated Circuit, ASIC), or one or more integrated circuits configured to execute a related program to implement the technical solutions provided in this application.

The processor 202 may be connected to one or more storage mediums by using the bus 210. The storage solutions may include the memory unit 204 and the storage device 212. The storage device 212 may be a read only memory (ReadOnly Memory, ROM), a static storage device, a dynamic storage device, or a random access memory (Random Access Memory, RAM). The memory unit 204 may be a random access memory. The memory unit 204 may be integrated with the processor 202 or integrated into the processor 202, or may be one or more storage units independent of the processor 202.

Program code to be executed by the processor 202 or a CPU in the processor 202 may be stored in the storage device 212 or the memory unit 204. Optionally, program code (for example, an operating system, an application program, a deduplication and compression module, or a communications module) stored in the storage device 212 is copied into the memory unit 204 for being executed by the processor 202.

The storage device 212 may include a high-speed random access memory (RAM), or may include nonvolatile memory, for example, one or more magnetic disk memories, a flash memory, or another nonvolatile memory. In some examples the storage device may further include a remote memory that is separated from the one or more processors 202, for example, a network disk that is accessed by using the communications interface 208 and a communications network. The communications network may be the Internet, an intranet, a local area network (LAN), a wide area network (WAN), a storage area network (SAN), or the like, or a combination of the foregoing networks. The storage device 212 may be further configured to store data deduplicated and compressed by a database server 104.

The operating system (for example, Darwin, RTXC, LINUX, UNIX, OS X, WINDOWS, or an embedded operating system such as Vxworks) includes various software components and/or drivers that are used for controlling and managing regular system tasks (for example, memory management, storage device control, and power management) and that facilitate communication between various hardware and software components.

The input/output interface 206 is configured to receive input data and information, and output data such as an operation result.

The communications interface 208 is, for example, but is not limited to a transceiver apparatus such as a transceiver, to implement communication between the computing device 200 and another device or a communications network.

The bus 210 may include a channel, to transfer information between parts (for example, the processor 202, the memory unit 204, the input/output interface 206, the communications interface 208, and the storage device 212) of the computing device 200. Optionally, the bus 210 may use a wired connection manner or use a wireless communication manner. This is not limited in this application.

It should be noted that, although for the computing device 200 shown in FIG. 2, only the processor 202, the memory unit 204, the input/output interface 206, the communications interface 208, the bus 210, and the storage device 212 are shown, in a specific implementation process, persons skilled in the art should understand that the computing device 200 further includes another device required for implementing normal running.

The computing device 200 may be a general-purpose computer or a computing device with a dedicated function, and includes but is not limited to any electronic device such as a portable computer, a personal desktop computer, a network server, a tablet computer, a mobile phone, or a personal digital assistant (PDA), or a device integrating two or more of the foregoing devices. A specific implementation form of the computing device 200 is not limited in this application.

In addition, the computing device 200 in FIG. 2 is merely an example of a computing device 200. The computing device 200 may include more or fewer components than those shown in FIG. 2, or have different component configuration manners. Persons skilled in the art should understand that, according to a specific requirement, the computing device 200 may further include a hardware device that implements another additional function. Alternatively, persons skilled in the art should understand that the computing device 200 may include only a device required for implementing this example of the present invention, and does not necessarily include all devices shown in FIG. 2. In addition, various components shown in FIG. 2 may be implemented by using hardware, software, or a combination of hardware and software.

The hardware structure shown in FIG. 2 and the foregoing descriptions are applicable to various computing devices provided in the examples of the present invention, and are applicable to executing various data storage methods provided in the examples of the present invention.

As shown in FIG. 2, the memory unit 204 of the computing device 200 includes a deduplication and compression module. The processor 202 executes program code of the deduplication and compression module, to perform a deduplication and compression operation on data to be stored in the storage device 212 of the database server 104. During data storage, the database server 104 stores to-be-stored data on a data block basis. There is a relatively high similarity between different data blocks, and parts that are with same data and that are in the different data blocks have a same relative location in the data blocks. According to this feature, when a deduplication operation is performed on similar data, data that is in a to-be-stored data block and a reference data block and that is at a same relative location may be compared, so that cross-comparison of data at different relative locations is avoided, and comparison complexity is greatly reduced.

The deduplication and compression module may include one or more operation instructions, so that the computing device performs one or more method steps according to the foregoing descriptions. A specific method step is described in detail in the following parts of this application.

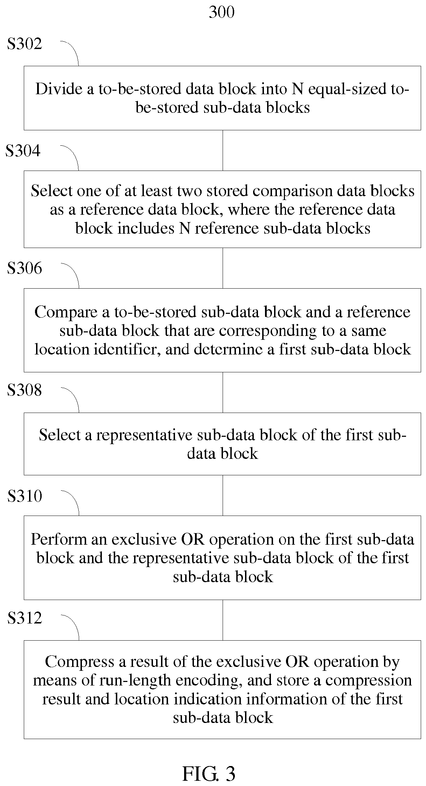

FIG. 3 is an example flowchart of a data storage method 300 according to an example of the present invention. As shown in FIG. 3, the method 300 includes the following steps.

S302. Divide a to-be-stored data block into N equal-sized to-be-stored sub-data blocks.

The N to-be-stored sub-data blocks are corresponding to N location identifiers, each to-be-stored sub-data block is corresponding to one location identifier, and N is a positive integer greater than 1. Specifically, the to-be-stored data block is divided into the N to-be-stored sub-data blocks, and a location ranking of a to-be-stored sub-data block in the to-be-stored data block may be used to represent a location identifier of the to-be-stored sub-data block.

In a specific implementation process, a size of the to-be-stored data block may be a size of a basic storage unit stored in a database, and the basic storage unit in the database is further divided into smaller sub-data blocks. For example, a data block in the basic storage unit is of 8 Kbytes, and if an optimal size of a to-be-stored sub-data block is 256 bytes, the to-be-stored data block is divided into 32 to-be-stored sub-data blocks whose sizes are 256 bytes. The to-be-stored data block whose size is 8 Kbytes is divided into smaller to-be-stored sub-data blocks, and a size of each to-be-stored sub-data block is 256 bytes. In this way, a basic unit for performing comparison during similar deduplication becomes 256 bytes.

S304. Select one of at least two stored comparison data blocks as a reference data block.

The reference data block includes N reference sub-data blocks, the N reference sub-data blocks are corresponding to the N location identifiers, and each reference sub-data block is corresponding to one location identifier. A manner for dividing the reference data block is the same as a manner for dividing the to-be-stored data block, and a manner for indicating the location identifier is the same as that of the to-be-stored data block.

S306. Compare a to-be-stored sub-data block and a reference sub-data block that are corresponding to a same location identifier, and determine a first sub-data block, where the first sub-data block is a to-be-stored sub-data block different from a compared reference sub-data block.

Specifically, a to-be-stored sub-data block corresponding to an i^{th} location identifier and a reference sub-data block corresponding to the i^{th} location identifier are compared, and the first sub-data block is determined in the N to-be-stored sub-data blocks, where i is a positive integer progressively increasing from 1 to N. A quantity of first sub-data blocks may be 1 or a positive integer greater than 1.

S308. Select a representative sub-data block of the first sub-data block.

S310. Perform an exclusive OR operation on the first sub-data block and the representative sub-data block of the first sub-data block.

S312. Compress a result of the exclusive OR operation in step S310 by means of run-length encoding, and store a compression result and location information of the first sub-data block.

In step S306, when the to-be-stored sub-data block and the reference sub-data block that are corresponding to the same location identifier are compared, to avoid comparison performed on a byte basis, a fingerprint of the to-be-stored sub-data block and a fingerprint of the reference sub-data block may be compared. If the fingerprints are the same, it indicates that the two sub-data blocks are the same. If the fingerprints are different, it indicates that the two sub-data blocks are different. A fingerprint is an identity certificate of a sub-data block. The fingerprint of the sub-data block is calculated by using multiple methods. For example, a hash fingerprint of a sub-data block may be calculated by using a method such as calculating an SHA1 or MD5 hash value. This is not limited in this example of the present invention.

The fingerprints of the to-be-stored sub-data block and the reference sub-data block that are corresponding to the same location identifier are compared, the first sub-data block is determined, and the location information of the first sub-data block is stored.

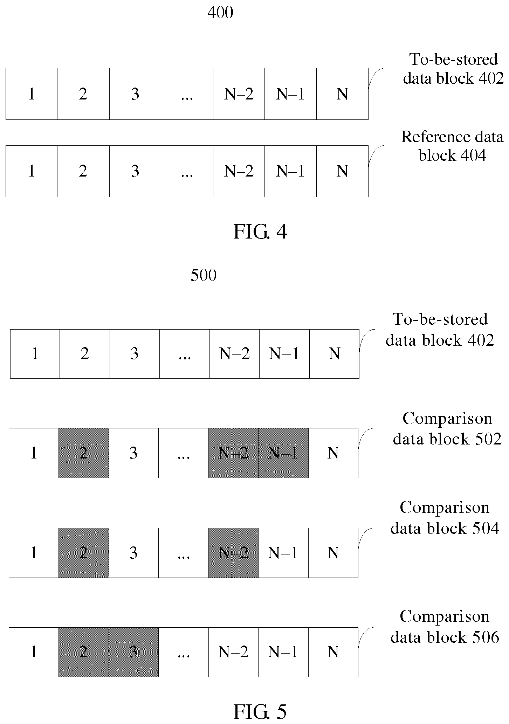

A possible division and comparison manner for the to-be-stored data block and the reference data block is shown in FIG. 4. A to-be-stored data block 402 is divided, according to a data sequence, into N equal-sized to-be-stored sub-data blocks numbered from 1 to N, and a ranking of a to-be-stored sub-data block may be used to represent a location identifier of the to-be-stored sub-data block. For example, i represents a location identifier of an i^{th} to-be-stored sub-data block. Likewise, a reference data block 404 is also divided into N equal-sized sub-data blocks numbered from 1 to N. Fingerprints of sub-data blocks with a same location identifier in the to-be-stored data block 402 and the reference data block 404 are compared, and fingerprints of a to-be-stored sub-data block and a reference sub-data block that are corresponding to a same location identifier are separately compared according to a location sequence. If the fingerprints are the same, it indicates that the sub-data blocks are the same. If the fingerprints are different, it indicates that the sub-data blocks are different. That is, a fingerprint of the to-be-stored sub-data block corresponding to the i^{th} location identifier and a fingerprint of the reference sub-data block corresponding to the i^{th} location identifier are compared. If the fingerprints are the same, it indicates that the to-be-stored sub-data block is the same as the reference sub-data block. If the fingerprints are different, it indicates that the to-be-stored sub-data block is different from the reference sub-data block, where i progressively increases from 1 to N.

If the fingerprints are the same, a deduplication operation may be performed on the to-be-stored sub-data block with the i^{th} location identifier, that is, the i^{th} to-be-stored sub-data block is not stored, and during data read, the i^{th} to-be-stored sub-data block of the to-be-stored data block 402 is restored by using the i^{th} reference sub-data block of the reference data block 404. If the fingerprints are different, it indicates that the i^{th} sub-data block of the to-be-stored data block 402 is different from the i^{th} sub-data block of the reference data block 404. In this case, location information of the i^{th} to-be-stored sub-data block is stored, operations in subsequent steps S308 to S312 are performed on the i^{th} sub-data block of the to-be-stored data block 402, and information after the operations is stored, where i progressively increases from 1 to N.

Optionally, in an implementation of this example of the present invention, the to-be-stored data block and the reference data block may be compared by using a "dichotomy", to find location information of sub-data blocks that are of the to-be-stored data block and the reference data block, that have a same location identifier, and that have different fingerprints.

A specific implementation procedure is: the to-be-stored data block and the reference data block are separately divided into two equal-sized data blocks: a "left data block" and a "right data block", and a fingerprint of a "left data block" and a fingerprint of a "right data block" of the to-be-stored data block are calculated. The fingerprint of the "left data block" of the to-be-stored data block and a fingerprint of a "left data block" of the reference data block are compared, and the fingerprint of the "right data block" of the to-be-stored data block and a fingerprint of a "right data block" of the reference data block are compared (if the fingerprint of the "left data block" and the fingerprint of the "right data block" of the reference data block are stored, values of the stored fingerprints may be directly used, or if the fingerprint of the "left data block" and the fingerprint of the "right data block" of the reference data block are not stored, the fingerprint of the "left data block" and the fingerprint of the "right data block" of the reference data block are calculated). If the fingerprint of the "left (right) data block" of the to-be-stored data block is the same as the fingerprint of the "left (right) data block" of the reference data block, it indicates that the "left (right) data block" of the to-be-stored data block is the same as the "left (right) data block" of the reference data block, and the "left (right) data block" of the to-be-stored data block and the "left (right) data block" of the reference data block are not further divided. If the fingerprint of the "left (right) data block" of the to-be-stored data block is different from the fingerprint of the "left (right) data block" of the reference data block, it indicates that the "left (right) data block" of the to-be-stored data block is different from the "left (right) data block" of the reference data block, and the "left (right) data block" of the to-be-stored data block and the "left (right) data block" of the reference data block are divided according to a same principle by using a "dichotomy", and fingerprints of data blocks obtained by means of division are separately compared. Division and comparison are performed in this manner, until a size of a data block obtained by means of division is equal to a size of a sub-data block. Therefore, location information of all sub-data blocks that are of the to-be-stored data block and the reference data block, that are at same locations, and that have different fingerprints is found, and the location information of the sub-data blocks that have different fingerprints is recorded.

When there is a relatively high similarity between the to-be-stored data block and the reference data block, use of the dichotomy can reduce a calculation amount of finding location information of sub-data blocks that are of the to-be-stored data block and the reference data block, that are at a same location, and that have different fingerprints, and improve a deduplication and compression speed.

It should be understood that the location information of the first sub-data block may be stored in multiple manners. For example, the location information of the first sub-data block may be stored by recording the location information of the first sub-data block, and a to-be-stored sub-data block whose location information is not recorded is a second sub-data block. Alternatively, the location information of the first sub-data block may be stored by recording location information of a second sub-data block, and a to-be-stored sub-data block whose location information is not recorded is the first sub-data block. In this example of the present invention, a manner for storing the location information of the first sub-data block is not limited.

In a specific implementation process, a ranking of the first sub-data block in the to-be-stored data block may be used to represent the location information of the first sub-data block. For example, as shown in FIG. 4, the location information of the i^{th} to-be-stored sub-data block in the to-be-stored data block may be represented by using i, where i is a positive integer greater than 0 and less than or equal to N. When the location information of the first sub-data block is recorded, this may be implemented by recording the location ranking of the first sub-data block in the to-be-stored data block, and a to-be-stored sub-data block whose location ranking is not recorded is a second sub-data block, or this may be implemented by recording a location ranking of a second sub-data block, and a to-be-stored sub-data block whose location ranking is not recorded is the first sub-data block.

In a specific implementation process, alternatively, the location information of the first sub-data block may be recorded by recording a head address and a tail address of the first sub-data block or by recording a head address and an address length of the first sub-data block. If location information of multiple first sub-data blocks is continuous, the continuous location information is recorded by recording only head addresses and tail addresses of continuous locations or by recording only head addresses and address lengths of continuous locations, so as to reduce storage space required for recording the continuous location information. It should be understood that the head address of the first sub-data block herein may be offset relative to a head address of the to-be-stored data block.

There is a higher similarity between data blocks stored in a database server 104, and a same part of different data blocks generally has a same relative location in the data blocks. According to this feature that a same part of different data blocks generally has a same location, a to-be-stored data block is divided into to-be-stored sub-data blocks of a smaller granularity, and fingerprints of sub-data blocks that are of the to-be-stored data block and a reference data block and that have a same location identifier are compared, thereby avoiding cross-comparison of sub-data blocks with different location identifiers, so that a same part of the to-be-stored data block and the reference data block can be found with a relatively small calculation amount, and a deduplication operation is performed on the same part, that is, sub-data blocks that are of the to-be-stored data block and the reference data block, that are at a same location, and that have a same fingerprint are not stored. During data restoration, the deduplicated sub-data block may be restored according to a sub-data block at a corresponding location of the reference data block. Therefore, a storage unit required for recording the to-be-stored data block is greatly reduced.

A fingerprint of a reference sub-data block of the reference data block may be calculated when the reference data block is stored, and is stored in a database. Alternatively, fingerprint calculation may be performed when the reference sub-data block and the to-be-stored sub-data block that are corresponding to the same location identifier and that are of the reference data block and the to-be-stored data block are compared. This is not limited in this example of the present invention.

Specifically, in S304, the selecting one of at least two stored comparison data blocks as a reference data block specifically includes: comparing the to-be-stored data block and the at least two comparison data blocks, where comparison is performed in a manner in step 306; and selecting, from the at least two comparison data blocks as the reference data block, a comparison data block that has a largest quantity of sub-data blocks the same as those in the to-be-stored data block. Further, a comparison data block that has a largest quantity of sub-data blocks the same as those in the to-be-stored data block and that has a smallest quantity of clusters of different sub-data blocks may be selected as the reference data block. A cluster of different sub-data blocks is a set of different sub-data blocks that are continuous in locations, and sub-data blocks at adjacent locations of the set are same sub-data blocks.

The to-be-stored data block is compared with multiple comparison data blocks, so that a similarity between each comparison data block and the to-be-stored data block can be determined. A comparison data block that has a largest quantity of sub-data blocks the same as those in the to-be-stored data block is a data block that has a highest similarity with the to-be-stored data block. Further, a comparison data block that has a smallest quantity of clusters of different sub-data blocks is selected as the reference data block from comparison data blocks that have a highest similarity with the to-be-stored data block, so that information required for recording locations of different sub-data blocks can be reduced, and a deduplication operation compression ratio is further increased.

For example, as shown in FIG. 5, the to-be-stored data block 402 is compared with a comparison data block 502, a comparison data block 504, and a comparison data block 506, and fingerprints of sub-data blocks at a same location of the to-be-stored data block 402 and each comparison data block are compared. If the fingerprints are the same, it indicates that the sub-data blocks are the same sub-data blocks. If the fingerprints are different, it indicates that the sub-data blocks are different sub-data blocks. As shown in FIG. 5, when the comparison data block 502 is compared with the to-be-stored data block 402, there are three different sub-data blocks: asecond sub-data block, a (N-2)^{th} sub-data block, and a (N-1)^{th} sub-data block. When the comparison data block 504 is compared with the to-be-stored data block 402, there are two different sub-data blocks: the second sub-data block and the (N-2)^{th} sub-data block. When the comparison data block 506 is compared with the to-be-stored data block 402, there are two different sub-data blocks: the second sub-data block and the third sub-data block. It is found by means of comparison that each of the comparison data block 504 and the comparison data block 506 has a largest quantity of sub-data blocks the same as those in the to-be-stored data block 402, that is, N-2 sub-data blocks. The comparison data block 506 has one cluster of different sub-data blocks, that is, a set including the second sub-data block and the third sub-data block, and the comparison data block 504 has two clusters of different sub-data blocks, that is, the second sub-data block and the (N-2)^{th} sub-data block. Therefore, the comparison data block 506 with a smallest quantity of clusters of different sub-data blocks is selected as a reference data block.

Fingerprints of sub-data blocks that are at a same location of the to-be-stored data block 402 and the comparison data block 506 are compared, and if it is found that fingerprints of the second sub-data block and the third sub-data block of the to-be-stored data block 402 are different from fingerprints of the second sub-data block and the third sub-data block of the comparison data block 506, location information of the second sub-data block and the third sub-data block is recorded. For example, an initial location and an end location of the cluster including the second sub-data block and the third sub-data block may be recorded, or an initial location of the cluster and a data length of the cluster may be recorded. This is not limited in this example of the present invention.

Optionally, in S308, the selecting a representative sub-data block of the first sub-data block includes: selecting a reference sub-data block that is corresponding to a location identifier that is corresponding to each first sub-data block as the representative sub-data block of the first sub-data block.

For example, as shown in FIG. 5, a reference data block of the to-be-stored data block 402 is the comparison data block 506. As shown in FIG. 5, when the comparison data block 506 is compared with the to-be-stored data block 402, there are two different sub-data blocks: the second sub-data block and the third sub-data block. Therefore, the second sub-data block of the comparison data block 506 is selected as a representative data block of the second to-be-stored sub-data block of the to-be-stored data block 402, and the third sub-data block of the comparison data block 506 is selected as a representative data block of the third to-be-stored sub-data block of the to-be-stored data block 402. An exclusive OR operation is performed on the second sub-data block of the to-be-stored data block 402 and the second sub-data block of the comparison data block 506, and an exclusive OR operation is performed on the third sub-data block of the to-be-stored data block 402 and the third sub-data block of the comparison data block 506. Because the second to-be-stored sub-data block and the third to-be-stored sub-data block are continuous in locations, run-length encoding may be uniformly performed on exclusive OR results of the second to-be-stored sub-data block and the third to-be-stored sub-data block, and location information is uniformly recorded.

Optionally, in S308, the selecting a representative sub-data block of the first sub-data block includes: separately performing an exclusive OR operation on the first sub-data block and at least two stored sub-data blocks, and selecting a stored sub-data block as the representative sub-data block according to run-length encoding compression ratios of results of the exclusive OR operations, where a result of exclusive OR performed on the stored sub-data block and the first sub-data block has a smallest run-length encoding compression ratio.

That is, an exclusive OR operation is separately performed on multiple optional stored sub-data blocks and all first sub-data blocks, run-length encoding compression ratios of results of the exclusive OR operations are separately calculated, and a stored sub-data block corresponding to a smallest run-length encoding compression ratio is selected as the reference sub-data block.

In S308, the selecting a representative sub-data block of the first sub-data block includes: performing an exclusive OR operation on every two first sub-data blocks, and selecting a first sub-data block as the representative sub-data block according to run-length encoding compression ratios of results of the exclusive OR operations, where a result of exclusive OR performed on the first sub-data block and another first sub-data block has a smallest run-length encoding compression ratio; and storing the representative sub-data block.

For example, the to-be-stored data block has M first sub-data blocks. For ease of description, the M first sub-data blocks are numbered from 1 to M according to a location sequence in the to-be-stored data block, and an exclusive OR operation is separately performed on every two of the M first sub-data blocks. In addition, run-length encoding compression ratios of exclusive OR results between each first sub-data block and other M-1 first sub-data blocks are calculated, that is, run-length encoding compression ratios of exclusive OR results between the first first sub-data block and the second to the M^{th} first sub-data blocks are calculated, and run-length encoding compression ratios of exclusive OR results between the second first sub-data block and the other M-1 first sub-data blocks (the first first sub-data block and the third to the M^{th} first sub-data blocks) are calculated. In this manner, run-length encoding compression ratios of exclusive OR results between the M^{th} first sub-data block and the first M-1 first sub-data blocks are calculated, and a first sub-data block is selected as the representative sub-data block, where results of exclusive OR performed on the first sub-data block and the other M-1 first sub-data blocks have a smallest run-length encoding compression ratio.

Specifically, in run-length encoding, compression encoding is performed by recording a character that continuously appears and a quantity of times that the character continuously appears. Therefore, during specific implementation, a run-length encoding compression ratio of a result of exclusive OR performed on each first sub-data block and another first sub-data block may be determined by calculating a size of compression space generated by performing run-length encoding on a character that continuously appears in the exclusive OR result. Larger compression space generated by performing run-length encoding indicates a larger run-length encoding compression ratio. For example, three same characters continuously appear, that is, 24 "0s" continuously appear, and storage space required for recording information that three same characters continuously appear is subtracted from three bytes, to obtain a size of generated compression space. If the storage space required for recording the information that three same characters continuously appear is two bytes, the generated compression space is one byte.

In S310, the exclusive OR operation is performed on the first sub-data block and the representative sub-data block of the first sub-data block. The exclusive OR operation is performed for a binary bit (bit) of a sub-data block, that is, an exclusive OR operation is performed on the to-be-stored sub-data block and the reference sub-data block. If values of bits at a same location of the to-be-stored sub-data block and the reference sub-data block are the same, an exclusive OR result is 0. If values of bits at a same location of the to-be-stored sub-data block and the reference sub-data block are different, an exclusive OR result is 1.

The exclusive OR result is a binary string including "0" and/or "1". Therefore, storage space required for recording information is reduced by compressing the exclusive OR result by means of run-length encoding.

The method 300 further includes: storing a fingerprint of the first sub-data block. Therefore, when the first sub-data block is subsequently used as a reference sub-data block of another data block, there is no need to repeatedly calculate the fingerprint.

During data read, an exclusive OR result may be restored according to a stored run-length encoding result, different sub-data blocks may be restored according to the restored exclusive OR result and the stored representative sub-data block. At a location at which the exclusive OR result is "1", it indicates that a value of the first sub-data block at the location is opposite to a value of the representative sub-data block, and at a location at which the exclusive OR result is "0", it indicates that a value of the first sub-data block at the location is the same as a value of the representative sub-data block. The original to-be-stored data block may be restored according to the restored first sub-data block, the stored location information of the first sub-data block, and the stored reference data block.

In an implementation of this example of the present invention, before step 302, the method 300 further includes: extracting a sample from to-be-stored data, separately determining a storage compression ratio, a storage speed, and a read speed of the sample according to different to-be-stored sub-data block sizes, and determining a value of N according to a size of a sub-data block with a smallest storage compression ratio if the storage speed and the read speed meet a constraint condition, where the constraint condition is that the storage speed is greater than or equal to a preset first threshold, and the read speed is greater than or equal to a preset second threshold.

In a specific process, in a process of determining quantity N for sub-data blocks, a proper sub-data block size and the quantity N of sub-data blocks may be determined according to sample data. It is assumed that a size of the to-be-stored data block is K, and a size of the to-be-stored sub-data block is M. A value of M needs to meet the following constraints:
M>0, that is, the value of M needs to be a positive number;
K/M≥2, that is, a quantity of to-be-stored sub-data blocks should be greater than or equal to 2; and
KmodM=0, that is, a result obtained after K modulo M is 0, to ensure that sizes of to-be-stored sub-data blocks are the same.

In values of M that meet the foregoing conditions, according to the procedure of the method 300, for the different to-be-stored sub-data block sizes M, the storage compression ratio, the storage speed, and the read speed of the sample are calculated. When the following constraint condition is met: the storage speed is greater than or equal to the preset first threshold, and the read speed is greater than or equal to the preset second threshold, a value of M with a smallest storage compression ratio is selected from the values of M, and the quantity N of sub-data blocks is determined according to N=K/M. The storage compression ratio is a ratio of a size of deduplicated and compressed data to the size of the to-be-stored data block. The deduplicated and compressed data is data required for storing information about the to-be-stored data block, and includes a run-length encoding result, data required for recording information about the reference data block and the reference sub-data block, and data for recording the location information of the first sub-data block.

It should be understood that the process of determining the size of the sub-data block and the quantity N of sub-data blocks is described above only as an example. The size of the sub-data block and the quantity N of sub-data blocks may be determined according to a statistical result of the sample data, or may be determined in another manner. For example, the size of the sub-data block and the quantity N dynamically change based on an empirical value, or are set before a system runs. This is not example in this embodiment of the present invention.

It should be understood that the method 300 may be executed by a client 102, or executed by the database server 104, or some steps are performed by a client 102, and some steps are performed by the database server 104. For example, the client may divide the to-be-stored data block into the N to-be-stored sub-data blocks, calculate a fingerprint of each to-be-stored sub-data block, and then send the fingerprints of the N to-be-stored sub-data blocks to the server 104. The server 104 performs step S304, selects a reference data block for the to-be-stored data block, determines the first sub-data block by comparing the to-be-stored sub-data block and the reference sub-data block that are with the same location identifier, and sends indication information of the first sub-data block to the client 102, the client 102 then sends the first sub-data block to the database server 104, and the database server performs subsequent operations. A specific execution body of the method 300 is not limited in this example of the present invention.

According to the technical solution disclosed in this example of the present invention, according to features of data similarity and location correlation in a database, a to-be-stored data block is divided into sub-data blocks of a smaller granularity, sub-data blocks that are of the to-be-stored data block and a reference data block and that are at a same location are compared, a deduplication operation is performed on same sub-data blocks with a relatively small calculation amount, an exclusive OR operation is performed on a sub-data block and a reference sub-data block that are different from each other, and run-length encoding compression is performed on an exclusive OR result. Therefore, storage space required for recording the to-be-stored data block is greatly reduced.

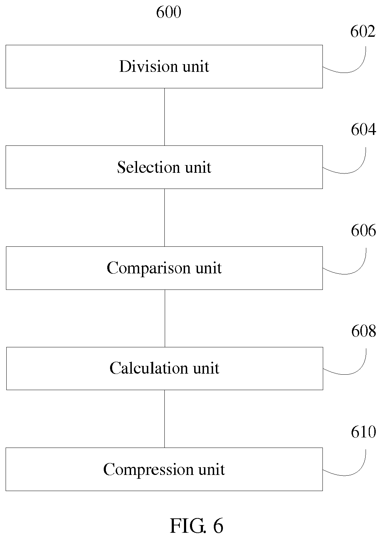

FIG. 6 is a schematic diagram of a logical structure of a data storage apparatus 600 according to an example of the present invention. As shown in FIG. 6, the apparatus 600 includes a division unit 602, a selection unit 604, a comparison unit 606, a calculation unit 608, and a compression unit 610.

The division unit 602 is configured to divide a to-be-stored data block into N equal-sized to-be-stored sub-data blocks. The N to-be-stored sub-data blocks are corresponding to N location identifiers, each to-be-stored sub-data block is corresponding to one location identifier, and N is a positive integer greater than 1.

The selection unit 604 is configured to select one of at least two stored comparison data blocks as a reference data block. The reference data block includes N reference sub-data blocks, the N reference sub-data blocks are corresponding to the N location identifiers, and each reference sub-data block is corresponding to one location identifier.

The comparison unit 606 is configured to: compare a to-be-stored sub-data block corresponding to an i^{th} location identifier and a reference sub-data block corresponding to the i^{th} location identifier, and determine a first sub-data block in the N to-be-stored sub-data blocks, where i is a positive integer progressively increasing from 1 to N, and the first sub-data block is a to-be-stored sub-data block different from a compared reference sub-data block.

The selection unit 604 is further configured to select a representative sub-data block of the first sub-data block.

The calculation unit 608 is configured to perform an exclusive OR operation on data of the first sub-data block and data of the representative sub-data block.

The compression unit 610 is configured to: compress a result of the exclusive OR operation by means of run-length encoding, and store a compression result and location information of the first sub-data block.

In a specific implementation process, the apparatus 600 further includes a deduplication unit. The comparison unit 606 is further configured to determine a second sub-data block in the N to-be-stored sub-data blocks. The second sub-data block is a to-be-stored sub-data block the same as a compared reference sub-data block. The deduplication unit is configured to perform a deduplication operation on the second sub-data block.

According to features of data similarity and location correlation in a database, a to-be-stored data block is divided into sub-data blocks of a smaller granularity, sub-data blocks that are of the to-be-stored data block and a reference data block and that are at a same location are compared, a deduplication operation is performed on same sub-data blocks with a relatively small calculation amount, an exclusive OR operation is performed on a sub-data block and a reference sub-data block that are different from each other, and run-length encoding compression is performed on an exclusive OR result. Therefore, storage space required for recording the to-be-stored data block is greatly reduced.

When a to-be-stored sub-data block and a reference sub-data block that are corresponding to a same location identifier are compared, to avoid comparison performed on a byte basis, the comparison unit 606 is specifically configured to compare a fingerprint of the to-be-stored sub-data block corresponding to the i^{th} location identifier and a fingerprint of the reference sub-data block corresponding to the i^{th} location identifier. If the fingerprints are the same, it indicates that the to-be-stored sub-data block is the same as the reference sub-data block, or if the fingerprints are different, it indicates that the to-be-stored sub-data block is different from the reference sub-data block. Fingerprints of sub-data blocks are compared, thereby avoiding comparison performed on a bit basis when the sub-data blocks are compared. Therefore, comparison operation complexity is reduced.

Optionally, that the selection unit 604 is configured to select one of at least two stored comparison data blocks as a reference data block includes: the selection unit 604 is configured to select, from the at least two comparison data blocks as the reference data block, a comparison data block that has a largest quantity of sub-data blocks the same as those in the to-be-stored data block. Further, the selection unit 604 may select a comparison data block that has a largest quantity of sub-data blocks the same as those in the to-be-stored data block and that has a smallest quantity of clusters of different sub-data blocks as the reference data block. A cluster of different sub-data blocks is a set of different sub-data blocks that are continuous in locations, and sub-data blocks at adjacent locations of the set are same sub-data blocks.

The to-be-stored data block is compared with multiple comparison data blocks, so that a similarity between each comparison data block and the to-be-stored data block can be determined. A comparison data block that has a largest quantity of sub-data blocks the same as those in the to-be-stored data block is a data block that has a highest similarity with the to-be-stored data block. Further, a comparison data block that has a smallest quantity of clusters of different sub-data blocks is selected as the reference data block from comparison data blocks that have a highest similarity with the to-be-stored data block, so that information required for recording locations of different sub-data blocks can be reduced, and a deduplication operation compression ratio is further increased.

Optionally, that the selection unit 604 is configured to select a representative sub-data block of the first sub-data block includes: the selection unit 604 is configured to select a reference sub-data block that is corresponding to a location identifier that is corresponding to each first sub-data block as the representative sub-data block of the first sub-data block.

Data blocks stored in a database have a higher similarity with each other, and a same part of different data blocks generally has a same relative location in the data blocks. Therefore, the reference sub-data block that is corresponding to the location identifier that is corresponding to each first sub-data block is selected as the representative sub-data block of the first sub-data block, so that a large quantity of continuous "0s" can appear in an exclusive OR result, and a run-length encoding compression ratio is greatly reduced.

Optionally, that the selection unit 604 is configured to select a representative sub-data block of the first sub-data block includes: the selection unit 604 is configured to: separately perform an exclusive OR operation on the first sub-data block and at least two stored sub-data blocks by using the exclusive OR unit, and select a stored sub-data block as the representative sub-data block according to run-length encoding compression ratios of results of the exclusive OR operations, where a result of exclusive OR performed on the stored sub-data block and the first sub-data block has a smallest run-length encoding compression ratio.

The stored sub-data block is selected as the representative sub-data block from stored sub-data blocks by means of comparison, where a result of an exclusive OR operation performed on the first sub-data block and the stored sub-data block has the smallest run-length encoding compression ratio, so that storage space required for storing the to-be-stored data block can be reduced to a relatively large extent.

Optionally, that the selection unit 604 is configured to select a representative sub-data block of the first sub-data block includes: the selection unit 604 is configured to: perform an exclusive OR operation on every two first sub-data blocks by using the exclusive OR unit, and select a first sub-data block as the representative sub-data block according to run-length encoding compression ratios of results of the exclusive OR operations, where a result of exclusive OR performed on the first sub-data block and another first sub-data block has a smallest run-length encoding compression ratio.

The first sub-data blocks are searched for the first sub-data block that has a highest similarity with the another first sub-data block, and the first sub-data block is used as the representative sub-data block, so that storage space required for storing the to-be-stored data block can be reduced without depending on stored sub-data blocks.

To determine an optimal value of N, the selection unit 604 is further configured to: extract a sample from to-be-stored data, separately determine a storage compression ratio, a storage speed, and a read speed of the sample according to different to-be-stored sub-data block sizes, and determine a value of N according to a size of a sub-data block with a smallest storage compression ratio if the storage speed and the read speed meet a constraint condition. The constraint condition is that the storage speed is greater than or equal to a preset first threshold, and the read speed is greater than or equal to a preset second threshold.

A most proper data block division method is selected by extracting the sample, so that storage space required for storing the to-be-stored data block can be reduced to a greatest extent when the storage processing speed and the read processing speed are met.

Optionally, the comparison unit 606 is further configured to store a fingerprint of the first sub-data block. Therefore, when the first sub-data block is subsequently used as a reference sub-data block of another data block, there is no need to repeatedly calculate the fingerprint.

This example of the present invention is an apparatus example corresponding to the method 300, and some feature descriptions in the example the method 300 are applicable to this example of the present invention. Details are not described herein again.

According to the technical solution disclosed in the present invention, according to features of data similarity and location correlation in a database, a to-be-stored data block is divided into sub-data blocks of a smaller granularity, sub-data blocks that are of the to-be-stored data block and a reference data block and that are at a same location are compared, a deduplication operation is performed on same sub-data blocks with a relatively small calculation amount, an exclusive OR operation is performed on a sub-data block and a reference sub-data block that are different from each other, and run-length encoding compression is performed on an exclusive OR result. Therefore, storage space required for recording the to-be-stored data block is greatly reduced.

In the several examples provided in this application, it should be understood that the disclosed system, device, and method may be implemented in other manners. For example, the described apparatus example is merely an example. For example, the module division is merely logical function division and may be other division during actual implementation. For example, multiple modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all the modules may be selected according to actual needs to achieve the objectives of the solutions of the examples.

In addition, functional modules in the examples of the present invention may be integrated into one processing module, or each of the modules may exist alone physically, or two or more modules are integrated into one module. The integrated module may be implemented in a form of hardware, or may be implemented in a form of hardware in addition to a software functional module.

When the foregoing integrated module is implemented in a form of a software functional module, the integrated unit may be stored in a computer-readable storage medium. The software functional module is stored in a storage medium and includes several instructions for instructing a computer device (which may be a personal computer, a server, or a network device) to perform some of the steps of the methods described in the examples of the present invention. The foregoing storage medium includes any medium that can store program code, such as a USB flash drive, a removable hard disk, a read-only memory (English: Read-Only Memory, ROM for short), a random access memory (English: Random Access Memory, RAM for short), a magnetic disk, or an optical disc.

Finally, it should be noted that the foregoing examples are merely intended for describing the technical solutions of the present invention, but not for limiting the present invention. Although the present invention is described in detail with reference to the foregoing examples persons of ordinary skill in the art should understand that they may still make modifications to the technical solutions described in the foregoing examples or make equivalent replacements to some technical features thereof.

## Claims

1. A Computer-implemented data storage method (300), comprising:
dividing (S302) a to-be-stored data block (402) into N equal-sized to-be-stored sub-data blocks, wherein the N to-be-stored sub-data blocks are corresponding to N location identifiers, each to-be-stored sub-data block is corresponding to one location identifier, and N is a positive integer greater than 1;
selecting (S304) one of at least two stored comparison data blocks as a reference data block (404), wherein the reference data block comprises N reference sub-data blocks, the N reference sub-data blocks are corresponding to the N location identifiers, and each reference sub-data block is corresponding to one location identifier;
comparing (S306) a to-be-stored sub-data block corresponding to an i^{th} location identifier and a reference sub-data block corresponding to the i^{th} location identifier, and determining a first sub-data block in the N to-be-stored sub-data blocks, wherein i is a positive integer progressively increasing from 1 to N, and the first sub-data block is a to-be-stored sub-data block different from a compared reference sub-data block;
selecting (S308) a representative sub-data block of the first sub-data block;
performing (S310) an exclusive OR operation on data of the first sub-data block and data of the representative sub-data block; and
compressing (S312) a result of the exclusive OR operation, and storing a compression result and location information of the first sub-data block,
**characterized in that** the compressing a result of the exclusive OR operation is implemented by means of run-length encoding, and the selecting a representative sub-data block of the first sub-data block includes: performing an exclusive OR operation on every two first sub-data blocks, and selecting a first sub-data block as the representative sub-data block according to run-length encoding compression ratios of results of the exclusive OR operations, where a result of exclusive OR performed on the first sub-data block and another first sub-data block has a smallest run-length encoding compression ratio; and storing the representative sub-data block,
wherein the to-be-stored data block has M first sub-data blocks, wherein the M first sub-data blocks are numbered from 1 to M according to a location sequence in the to-be-stored data block, and an exclusive OR operation is separately performed on every two of the M first sub-data blocks,
wherein in the run-length encoding, compression encoding is performed by recording a character that continuously appears and a quantity of times that the character continuously appears, and wherein a run-length encoding compression ratio of a result of exclusive OR performed on each first sub-data block and another first sub-data block is determined by calculating a size of compression space generated by performing run-length encoding on the character that continuously appears in the exclusive OR result.

2. The method (300) according to claim 1, wherein the comparing (S306) a to-be-stored sub-data block corresponding to an i^{th} location identifier and a reference sub-data block corresponding to the i^{th} location identifier comprises: comparing a fingerprint of the to-be-stored sub-data block corresponding to the i^{th} location identifier and a fingerprint of the reference sub-data block corresponding to the i^{th} location identifier, wherein if the fingerprints are the same, it indicates that the to-be-stored sub-data block is the same as the reference sub-data block, or if the fingerprints are different, it indicates that the to-be-stored sub-data block is different from the reference sub-data block.

3. The method according to claims 1 or 2, wherein the selecting (S304) one of at least two stored comparison data blocks as a reference data block comprises: selecting a comparison data block, which comprises a largest quantity of same sub-data blocks with the to-be-stored data block (402), from the at least two comparison data blocks as the reference data block.

4. The method (300) according to any one of claims 1 to 3, wherein the selecting (S308) a representative sub-data block of the first sub-data block comprises: selecting a reference sub-data block corresponding to the same location identifier with the first sub-data block as the representative sub-data block of the first sub-data block.

5. The method (300) according to any one of claims 1 to 3, wherein the selecting (S308) a representative sub-data block of the first sub-data block comprises: separately performing an exclusive OR operation on the first sub-data block and at least two stored sub-data blocks, and selecting a stored sub-data block as the representative sub-data block according to run-length encoding compression ratios of results of the exclusive OR operations, wherein a result of exclusive OR performed on the stored sub-data block and the first sub-data block has a smallest run-length encoding compression ratio.

6. The method (300) according to any one of claims 1 to 3, wherein the selecting (S308) a representative sub-data block of the first sub-data block comprises: performing an exclusive OR operation on every two first sub-data blocks, and selecting a first sub-data block as the representative sub-data block according to run-length encoding compression ratios of results of the exclusive OR operations, wherein a result of exclusive OR performed on the first sub-data block and another first sub-data block has a smallest run-length encoding compression ratio.

7. The method according to any one of claims 1 to 6, before the dividing a to-be-stored data block (402) into N equal-sized to-be-stored sub-data blocks, further comprising:
extracting a sample from to-be-stored data, separately determining a storage compression ratio, a storage speed, and a read speed of the sample according to different to-be-stored sub-data block sizes, and determining a value of N according to a size of a sub-data block with a smallest storage compression ratio if the storage speed and the read speed meet a constraint condition, wherein the constraint condition is that the storage speed is greater than or equal to a preset first threshold, and the read speed is greater than or equal to a preset second threshold.

8. Adata storage apparatus (108, 600), comprising:
a division unit, configured to divide a to-be-stored data block (402) into N equal-sized to-be-stored sub-data blocks, wherein the N to-be-stored sub-data blocks are corresponding to N location identifiers, each to-be-stored sub-data block is corresponding to one location identifier, and N is a positive integer greater than 1;
a selection unit, configured to select one of at least two stored comparison data blocks as a reference data block (404), wherein the reference data block comprises N reference sub-data blocks, the N reference sub-data blocks are corresponding to the N location identifiers, and each reference sub-data block is corresponding to one location identifier;
a comparison unit (606), configured to: compare a to-be-stored sub-data block corresponding to an i^{th} location identifier and a reference sub-data block corresponding to the i^{th} location identifier, and determine a first sub-data block in the N to-be-stored sub-data blocks, wherein i is a positive integer progressively increasing from 1 to N, and the first sub-data block is a to-be-stored sub-data block different from a compared reference sub-data block, wherein
the selection unit (604) is further configured to select a representative sub-data block of the first sub-data block;
a calculation unit (608), configured to perform an exclusive OR operation on data of the first sub-data block and data of the representative sub-data block; and
a compression unit (610), configured to: compress a result of the exclusive OR operation, and store a compression result and location information of the first sub-data block,
**characterized in that** the compressing a result of the exclusive OR operation is implemented by means of run-length encoding, and that the selection unit is configured to select a representative sub-data block of the first sub-data block includes: the selection unit is configured to: perform an exclusive OR operation on every two first sub-data blocks by using an exclusive OR unit, and select a first sub-data block as the representative sub-data block according to run-length encoding compression ratios of results of the exclusive OR operations, where a result of exclusive OR performed on the first sub-data block and another first sub-data block has a smallest run-length encoding compression ratio,
wherein the to-be-stored data block has M first sub-data blocks, wherein the M first sub-data blocks are numbered from 1 to M according to a location sequence in the to-be-stored data block, and an exclusive OR operation is separately performed on every two of the M first sub-data blocks,
wherein in the run-length encoding, compression encoding is performed by recording a character that continuously appears and a quantity of times that the character continuously appears, and wherein a run-length encoding compression ratio of a result of exclusive OR performed on each first sub-data block and another first sub-data block is determined by calculating a size of compression space generated by performing run-length encoding on the character that continuously appears in the exclusive OR result.

9. The apparatus according to claim 8, wherein the comparison unit (606) is specifically configured to compare a fingerprint of the to-be-stored sub-data block corresponding to the i^{th} location identifier and a fingerprint of the reference sub-data block corresponding to the i^{th} location identifier, wherein if the fingerprints are the same, it indicates that the to-be-stored sub-data block is the same as the reference sub-data block, or if the fingerprints are different, it indicates that the to-be-stored sub-data block is different from the reference sub-data block.

10. The apparatus according to claim 8 or 9, wherein when selecting one of at least two stored comparison data blocks as a reference data block the selection unit is further configured to select a stored data block, which comprises a largest quantity of same sub-data blocks with the to-be-stored data block (402), from the at least two comparison data blocks as the reference data block.

11. The apparatus according to any one of claims 8 to 10, wherein that the selection unit (604) is configured to select a representative sub-data block of the first sub-data block comprises: the selection unit is configured to select a reference sub-data block that is corresponding to a location identifier that is corresponding to each first sub-data block as the representative sub-data block of the first sub-data block.

12. The apparatus according to any one of claims 8 to 10, wherein that the selection unit (604) is configured to select a representative sub-data block of the first sub-data block comprises: the selection unit is configured to: separately perform an exclusive OR operation on the first sub-data block and at least two stored sub-data blocks by using an exclusive OR unit, and select a stored sub-data block as the representative sub-data block according to run-length encoding compression ratios of results of the exclusive OR operations, wherein a result of exclusive OR performed on the stored sub-data block and the first sub-data block has a smallest run-length encoding compression ratio.

13. The apparatus according to any one of claims 8 to 10, wherein that the selection unit (604) is configured to select a representative sub-data block of the first sub-data block comprises: the selection unit is configured to: perform an exclusive OR operation on every two first sub-data blocks by using the exclusive OR unit, and select a first sub-data block as the representative sub-data block according to run-length encoding compression ratios of results of the exclusive OR operations, wherein a result of exclusive OR performed on the first sub-data block and another first sub-data block has a smallest run-length encoding compression ratio.

14. The apparatus according to any one of claims 8 to 13, wherein the selection unit (604) is further configured to:
extract a sample from to-be-stored data, separately determine a storage compression ratio, a storage speed, and a read speed of the sample according to different to-be-stored sub-data block sizes, and determine a value of N according to a size of a sub-data block with a smallest storage compression ratio if the storage speed and the read speed meet a constraint condition, wherein the constraint condition is that the storage speed is greater than or equal to a preset first threshold, and the read speed is greater than or equal to a preset second threshold.

15. A computer readable medium, comprising a computer-executable instruction, wherein when a processor (202) of a computer executes the computer-executable instruction, the computer executes the method according to any one of claims 1 to 7.

## Patentansprüche

1. Computerimplementiertes Datenspeicherungsverfahren (300), umfassend:
Aufteilen (S302) eines zu speichernden Datenblocks (402) in N zu speichernde Subdatenblöcke gleicher Größe, wobei die N zu speichernden Subdatenblöcke N Ortskennungen entsprechen, jeder zu speichernde Subdatenblock einer Ortskennung entspricht und N eine positive ganze Zahl größer als 1 ist;
Auswählen (S304) eines von mindestens zwei gespeicherten Vergleichsdatenblöcken als einen Referenzdatenblock (404), wobei der Referenzdatenblock N Referenzsubdatenblöcke umfasst, die N Referenzsubdatenblöcke den N Ortskennungen entsprechen und jeder Referenzsubdatenblock einer Ortskennung entspricht;
Vergleichen (S306) eines zu speichernden Subdatenblocks, der einer i-ten Ortskennung entspricht, und eines Referenzsubdatenblocks, der der i-ten Ortskennung entspricht, und Bestimmen eines ersten Subdatenblocks in den N zu speichernden Subdatenblöcken, wobei i eine schrittweise von 1 bis N zunehmende positive ganze Zahl ist und der ersten Subdatenblock ein zu speichernder Subdatenblock ist, der von einem verglichenen Referenzsubdatenblock verschieden ist;
Auswählen (S308) eines repräsentativen Subdatenblocks des ersten Subdatenblocks;
Ausführen (S310) einer Exklusiv-OR-Operation an Daten des ersten Subdatenblocks und Daten des repräsentativen Subdatenblocks; und
Komprimieren (S312) eines Ergebnisses der Exklusiv-OR-Operation und Speichern eines Komprimierungsergebnisses und von Ortsinformationen des ersten Subdatenblocks,
**dadurch gekennzeichnet, dass** das Komprimieren eines Ergebnisses der Exklusiv-OR-Operation mittels Lauflängencodierung implementiert wird und das Auswählen eines repräsentativen Subdatenblocks des ersten Subdatenblocks Folgendes umfasst: Ausführen einer Exklusiv-OR-Operation an allen zwei ersten Subdatenblöcken und Auswählen eines ersten Subdatenblocks als den repräsentativen Subdatenblock gemäß Lauflängencodierungs-Komprimierungsverhältnissen von Ergebnissen der Exklusiv-OR-Operationen, wobei ein Ergebnis des an dem ersten Subdatenblock und einem anderen ersten Subdatenblock ausgeführten Exklusiv-OR ein kleinstes Lauflängencodierungs-Komprimierungsverhältnis aufweist; und Speichern des repräsentativen Subdatenblocks,
wobei der zu speichernde Datenblock M erste Subdatenblöcke aufweist, wobei die M ersten Subdatenblöcke gemäß einer Ortssequenz in dem zu speichernden Datenblock von 1 bis M beziffert werden und eine Exklusiv-OR-Operation getrennt an allen zwei der M ersten Subdatenblöcke ausgeführt wird,
wobei bei der Lauflängencodierung Komprimierungscodierung durchgeführt wird, indem ein Zeichen, das kontinuierlich erscheint, und eine Anzahl von Malen, wie oft das Zeichen kontinuierlich erscheint, aufgezeichnet werden und wobei ein Lauflängencodierungs-Komprimierungsverhältnis eines Ergebnisses des an jedem ersten Subdatenblock und einem anderen ersten Subdatenblock ausgeführten Exklusiv-OR durch Berechnen einer Größe des durch Ausführen von Lauflängencodierung an dem Zeichen, das kontinuierlich in dem Exklusiv-OR-Ergebnis erscheint, erzeugten Komprimierungsraums bestimmt wird.

2. Verfahren (300) nach Anspruch 1, wobei das Vergleichen (S306) eines zu speichernden Subdatenblocks, der einer i-ten Ortskennung entspricht, und eines Referenzsubdatenblocks, der der i-ten Ortskennung entspricht, Folgendes umfasst: Vergleichen eines Fingerabdrucks des zu speichernden Subdatenblocks, der der i-ten Ortskennung entspricht, und eines Fingerabdrucks des Referenzsubdatenblocks, der der i-ten Ortskennung entspricht, wobei, wenn die Fingerabdrücke gleich sind, dies angibt, dass der zu speichernde Subdatenblock derselbe wie der Referenzsubdatenblock ist, oder wenn die Fingerabdrücke verschieden sind, dies angibt, dass der zu speichernde Subdatenblock von dem Referenzsubdatenblock verschieden ist.

3. Verfahren nach Anspruch 1 oder 2, wobei das Auswählen (S304) eines von mindestens zwei gespeicherten Vergleichsdatenblöcken als einen Referenzdatenblock Folgendes umfasst: Auswählen eines Vergleichsdatenblocks, der eine größte Anzahl selber Subdatenblöcke mit dem zu speichernden Datenblock (402) aufweist, aus den mindestens zwei Vergleichsdatenblöcken als den Referenzdatenblock.

4. Verfahren (300) nach einem der Ansprüche 1 bis 3, wobei das Auswählen (S308) eines repräsentativen Subdatenblocks des ersten Subdatenblocks Folgendes umfasst: Auswählen eines Referenzsubdatenblocks, der derselben Ortskennung mit dem ersten Subdatenblock entspricht, als den repräsentativen Subdatenblock des ersten Subdatenblocks.

5. Verfahren (300) nach einem der Ansprüche 1 bis 3, wobei das Auswählen (S308) eines repräsentativen Subdatenblocks des ersten Subdatenblocks Folgendes umfasst: getrenntes Ausführen einer Exklusiv-OR-Operation an dem Subdatenblock und mindestens zwei gespeicherten Subdatenblöcken und Auswählen eines gespeicherten Subdatenblocks als den repräsentativen Subdatenblock gemäß Lauflängencodierungs-Komprimierungsverhältnissen von Ergebnissen der Exklusiv-OR-Operationen, wobei ein Ergebnis des an dem gespeicherten Subdatenblock und dem ersten Subdatenblock ausgeführten Exklusiv-OR ein kleinstes Lauflängencodierungs-Komprimierungsverhältnis aufweist.

6. Verfahren (300) nach einem der Ansprüche 1 bis 3, wobei das Auswählen (S308) eines repräsentativen Subdatenblocks des ersten Subdatenblocks Folgendes umfasst: Ausführen einer Exklusiv-OR-Operation an allen zwei ersten Subdatenblöcken und Auswählen eines ersten Subdatenblocks als den repräsentativen Subdatenblock gemäß Lauflängencodierungs-Komprimierungsverhältnissen von Ergebnissen der Exklusiv-OR-Operationen, wobei ein Ergebnis des an dem ersten Subdatenblock und einem anderen ersten Subdatenblock ausgeführten Exklusiv-OR ein kleinstes Lauflängencodierungs-Komprimierungsverhältnis aufweist.

7. Verfahren nach einem der Ansprüche 1 bis 6, das vor dem Aufteilen eines zu speichernden Datenblocks (402) in N zu speichernde Subdatenblöcke gleicher Größe ferner Folgendes umfasst:
Extrahieren einer Stichprobe aus zu speichernden Daten, getrenntes Bestimmen eines Speicherungskomprimierungsverhältnisses, einer Speicherungsgeschwindigkeit und einer Lesegeschwindigkeit der Stichprobe gemäß verschiedenen zu speichernden Subdatenblockgrößen und Bestimmen eines Werts von N gemäß einer Größe eines Subdatenblocks mit einem kleinsten Speicherungskomprimierungsverhältnis, wenn die Speicherungsgeschwindigkeit und die Lesegeschwindigkeit eine Zwangsbedingung erfüllen, wobei die Zwangsbedingung darin besteht, dass die Speicherungsgeschwindigkeit größer oder gleich einer voreingestellten ersten Schwelle ist und die Lesegeschwindigkeit größer oder gleich einer voreingestellten zweiten Schwelle ist.

8. Datenspeicherungsvorrichtung (108, 600), umfassend:
eine Aufteilungseinheit, ausgelegt zum Aufteilen eines zu speichernden Datenblocks (402) in N zu speichernde Subdatenblöcke gleicher Größe, wobei die N zu speichernden Subdatenblöcke N Ortskennungen entsprechen, jeder zu speichernde Subdatenblock einer Ortskennung entspricht und N eine positive ganze Zahl größer als 1 ist;
eine Auswahleinheit, ausgelegt zum Auswählen eines von mindestens zwei gespeicherten Vergleichsdatenblöcken als einen Referenzdatenblock (404), wobei der Referenzdatenblock N Referenzsubdatenblöcke umfasst, die N Referenzsubdatenblöcke den N Ortskennungen entsprechen und jeder Referenzsubdatenblock einer Ortskennung entspricht;
eine Vergleichseinheit (606), ausgelegt zum: Vergleichen eines zu speichernden Subdatenblocks, der einer i-ten Ortskennung entspricht, und eines Referenzsubdatenblocks, der der i-ten Ortskennung entspricht, und Bestimmen eines ersten Subdatenblocks in den N zu speichernden Subdatenblöcken, wobei i eine schrittweise von 1 bis N zunehmende positive ganze Zahl ist und der erste Subdatenblock ein zu speichernder Subdatenblock ist, der von einem verglichenen Referenzsubdatenblock verschieden ist, wobei
die Auswahleinheit (604) ferner ausgelegt ist zum Auswählen eines repräsentativen Subdatenblocks des ersten Subdatenblocks;
eine Berechnungseinheit (608), ausgelegt zum Ausführen einer Exklusiv-OR-Operation an Daten des ersten Subdatenblocks und Daten des repräsentativen Subdatenblocks; und
eine Komprimierungseinheit (610), ausgelegt zum: Komprimieren eines Ergebnisses der Exklusiv-OR-Operation und Speichern eines Komprimierungsergebnisses und von Ortsinformationen des ersten Datenblocks,
**dadurch gekennzeichnet, dass** das Komprimieren eines Ergebnisses der Exklusiv-OR-Operation mittels Lauflängencodierung implementiert wird und dass die Auswahleinheit dazu ausgelegt ist, einen repräsentativen Subdatenblock des ersten Subdatenblocks auszuwählen, umfasst: die Auswahleinheit ist ausgelegt zum: Ausführen einer Exklusiv-OR-Operation an allen zwei ersten Subdatenblöcken unter Verwendung einer Exklusiv-OR-Einheit, und Auswählen eines ersten Subdatenblocks als den repräsentativen Subdatenblock gemäß Lauflängencodierungs-Komprimierungsverhältnissen von Ergebnissen der Exklusiv-OR-Operationen, wobei ein Ergebnis des an dem ersten Subdatenblock und einem anderen ersten Subdatenblock ausgeführten Exklusiv-OR ein kleinstes Lauflängencodierungs-Komprimierungsverhältnis aufweist;
wobei der zu speichernde Datenblock M erste Subdatenblöcke aufweist, wobei die M ersten Subdatenblöcke gemäß einer Ortssequenz in dem zu speichernden Datenblock von 1 bis M beziffert werden und eine Exklusiv-OR-Operation getrennt an allen zwei der M ersten Subdatenblöcke ausgeführt wird,
wobei bei der Lauflängencodierung Komprimierungscodierung durchgeführt wird, indem ein Zeichen, das kontinuierlich erscheint, und eine Anzahl von Malen, wie oft das Zeichen kontinuierlich erscheint, aufgezeichnet werden und wobei ein Lauflängencodierungs-Komprimierungsverhältnis eines Ergebnisses des an jedem ersten Subdatenblock und einem anderen ersten Subdatenblock ausgeführten Exklusiv-OR durch Berechnen einer Größe des durch Ausführen von Lauflängencodierung an dem Zeichen, das kontinuierlich in dem Exklusiv-OR-Ergebnis erscheint, erzeugten Komprimierungsraums bestimmt wird.

9. Vorrichtung nach Anspruch 8, wobei die Vergleichseinheit (606) speziell ausgelegt ist zum Vergleichen eines Fingerabdrucks des zu speichernden Subdatenblocks, der der i-ten Ortskennung entspricht, und eines Fingerabdrucks des Referenzsubdatenblocks, der der i-ten Ortskennung entspricht, wobei, wenn die Fingerabdrücke gleich sind, dies angibt, dass der zu speichernde Subdatenblock derselbe wie der Referenzsubdatenblock ist, oder wenn die Fingerabdrücke verschieden sind, dies angibt, dass der zu speichernde Subdatenblock von dem Referenzsubdatenblock verschieden ist.

10. Vorrichtung nach Anspruch 8 oder 9, wobei beim Auswählen eines von mindestens zwei gespeicherten Vergleichsdatenblöcken als einen Referenzdatenblock die Auswahleinheit ferner ausgelegt ist zum Auswählen eines Vergleichsdatenblocks, der eine größte Anzahl selber Subdatenblöcke mit dem zu speichernden Datenblock (402) aufweist, aus den mindestens zwei Vergleichsdatenblöcken als den Referenzdatenblock.

11. Vorrichtung nach einem der Ansprüche 8 bis 10, wobei dass die Auswahleinheit (604) ausgelegt ist zum Auswählen eines repräsentativen Subdatenblocks des ersten Subdatenblocks Folgendes umfasst: die Auswahleinheit ist ausgelegt zum Auswählen eines Referenzsubdatenblocks, der einer Ortskennung entspricht, die jedem ersten Subdatenblock entspricht, als den repräsentativen Subdatenblock des ersten Subdatenblocks.

12. Vorrichtung nach einem der Ansprüche 8 bis 10, wobei dass die Auswahleinheit (604) ausgelegt ist zum Auswählen eines repräsentativen Subdatenblocks des ersten Subdatenblocks Folgendes umfasst: die Auswahleinheit ist ausgelegt zum: getrennten Ausführen einer Exklusiv-OR-Operation an dem Subdatenblock und mindestens zwei gespeicherten Subdatenblöcken unter Verwendung einer Exklusiv-OR-Einheit und Auswählen eines gespeicherten Subdatenblocks als den repräsentativen Subdatenblock gemäß Lauflängencodierungs-Komprimierungsverhältnissen von Ergebnissen der Exklusiv-OR-Operationen, wobei ein Ergebnis des an dem gespeicherten Subdatenblock und dem ersten Subdatenblock ausgeführten Exklusiv-OR ein kleinstes Lauflängencodierungs-Komprimierungsverhältnis aufweist.

13. Vorrichtung nach einem der Ansprüche 8 bis 10, wobei dass die Auswahleinheit (604) ausgelegt ist zum Auswählen eines repräsentativen Subdatenblocks des ersten Subdatenblocks Folgendes umfasst: die Auswahleinheit ist ausgelegt zum: Ausführen einer Exklusiv-OR-Operation an allen zwei ersten Subdatenblöcken unter Verwendung der Exklusiv-OR-Einheit und Auswählen eines ersten Subdatenblocks als den repräsentativen Subdatenblock gemäß Lauflängencodierungs-Komprimierungsverhältnissen von Ergebnissen der Exklusiv-OR-Operationen, wobei ein Ergebnis des an dem ersten Subdatenblock und einem anderen ersten Subdatenblock ausgeführten Exklusiv-OR ein kleinstes Lauflängencodierungs-Komprimierungsverhältnis aufweist.

14. Vorrichtung nach einem der Ansprüche 8 bis 13, wobei die Auswahleinheit (604) ferner ausgelegt ist zum:
Extrahieren einer Stichprobe aus zu speichernden Daten, getrenntes Bestimmen eines Speicherungskomprimierungsverhältnisses, einer Speicherungsgeschwindigkeit und einer Lesegeschwindigkeit der Stichprobe gemäß verschiedenen zu speichernden Subdatenblockgrößen und Bestimmen eines Werts von N gemäß einer Größe eines Subdatenblocks mit einem kleinsten Speicherungskomprimierungsverhältnis, wenn die Speicherungsgeschwindigkeit und die Lesegeschwindigkeit eine Zwangsbedingung erfüllen, wobei die Zwangsbedingung darin besteht, dass die Speicherungsgeschwindigkeit größer oder gleich einer voreingestellten ersten Schwelle ist und die Lesegeschwindigkeit größer oder gleich einer voreingestellten zweiten Schwelle ist.

15. Computerlesbares Medium, das eine computerausführbare Anweisung umfasst, wobei, wenn ein Prozessor (202) eines Computers die computerausführbare Anweisung ausführt, der Computer das Verfahren nach einem der Ansprüche 1 bis 7 ausführt.

## Revendications

1. Procédé (300) de stockage de données implémenté par ordinateur, comprenant :
la division (S302) d'un bloc de données à stocker (402) en N sous-blocs de données à stocker de taille égale, dans laquelle les N sous-blocs de données à stocker correspondent à N identifiants d'emplacement, chaque sous-bloc de données à stocker correspond à un identifiant d'emplacement, et N est un nombre entier positif supérieur à 1 ;
la sélection (S304) d'un parmi au moins deux blocs de données de comparaison stockés en tant que bloc de données de référence (404), dans laquelle le bloc de données de référence comprend N sous-blocs de données de référence, les N sous-blocs de données de référence correspondent aux N identifiants d'emplacement, et chaque sous-bloc de données de référence correspond à un identifiant d'emplacement ;
la comparaison (S306) d'un sous-bloc de données à stocker correspondant à un i^{ème} identifiant d'emplacement et d'un sous-bloc de données de référence correspondant au i^{ème} identifiant d'emplacement, et la détermination d'un premier sous-bloc de données dans les N sous-blocs de données à stocker, dans laquelle i est un nombre entier positif progressivement croissant de 1 à N, et le premier sous-bloc de données est un sous-bloc de données à stocker différent d'un sous-bloc de données de référence comparé ;
la sélection (S308) d'un sous-bloc de données représentatif du premier sous-bloc de données ;
la réalisation (S310) d'une opération OU exclusif sur des données du premier sous-bloc de données et des données du sous-bloc de données représentatif ; et
la compression (S312) d'un résultat de l'opération OU exclusif, et le stockage d'un résultat de compression et d'informations d'emplacement du premier sous-bloc de données,
**caractérisé en ce que** la compression d'un résultat de l'opération OU exclusif est implémentée au moyen d'un codage par longueur de plage, et la sélection d'un sous-bloc de données représentatif du premier sous-bloc de données comprend : la réalisation d'une opération OU exclusif sur un premier sous-bloc de données sur deux, et la sélection d'un premier sous-bloc de données en tant que sous-bloc de données représentatif en fonction des taux de compression de codage par longueur de plage de résultats des opérations OU exclusif, où un résultat de l'OU exclusif réalisée sur le premier sous-bloc de données et un autre premier sous-bloc de données a un taux de compression de codage par longueur de plage le plus petit ; et le stockage du sous-bloc de données représentatif,
dans lequel le bloc de données à stocker comporte M premiers sous-blocs de données, dans lequel les M premiers sous-blocs de données sont numérotés de 1 à M en fonction d'une suite d'emplacements dans le bloc de données à stocker, et une opération OU exclusif est réalisée séparément sur un des M premiers sous-blocs de données sur deux,
dans lequel, dans le codage par longueur de plage, un codage de compression est réalisé en enregistrant un caractère qui apparaît en continu et un nombre de fois où le caractère apparaît en continu, et dans lequel un taux de compression de codage par longueur de plage d'un résultat d'une OU exclusif réalisée sur chaque premier sous-bloc de données et un autre premier sous-bloc de données est déterminé en calculant une taille d'un espace de compression généré par la réalisation d'un codage par longueur de plage sur le caractère qui apparaît en continu dans le résultat OU exclusif.

2. Procédé (300) selon la revendication 1, dans lequel la comparaison (S306) d'un sous-bloc de données à stocker correspondant à un i^{ème} identifiant d'emplacement et d'un sous-bloc de données de référence correspondant au i^{ème} identifiant d'emplacement comprend : la comparaison d'une empreinte digitale du sous-bloc de données à stocker correspondant au i^{ème} identifiant d'emplacement et d'une empreinte digitale du sous-bloc de données de référence correspondant au i^{ème} identifiant d'emplacement, dans lequel, si les empreintes digitales sont identiques, cela indique que le sous-bloc de données à stocker est le même que le sous-bloc de données de référence, ou si les empreintes digitales sont différentes, cela indique que le sous-bloc de données à stocker est différent du sous-bloc de données de référence.

3. Procédé selon la revendication 1 ou 2, dans lequel la sélection (S304) d'un parmi au moins deux blocs de données de comparaison stockés en tant que bloc de données de référence comprend : la sélection d'un bloc de données de comparaison, qui comprend une quantité la plus grande de sous-blocs de données identiques avec le bloc de données à stocker (402), à partir des au moins deux blocs de données de comparaison en tant que bloc de données de référence.

4. Procédé (300) selon l'une quelconque des revendications 1 à 3, dans lequel la sélection (S308) d'un sous-bloc de données représentatif du premier sous-bloc de données comprend : la sélection d'un sous-bloc de données de référence correspondant au même identifiant d'emplacement avec le premier sous-bloc de données en tant que sous-bloc de données représentatif du premier sous-bloc de données.

5. Procédé (300) selon l'une quelconque des revendications 1 à 3, dans lequel la sélection (S308) d'un sous-bloc de données représentatif du premier sous-bloc de données comprend : la réalisation séparée d'une opération OU exclusif sur le premier sous-bloc de données et au moins deux sous-blocs de données stockés, et la sélection d'un sous-bloc de données stocké en tant que sous-bloc de données représentatif en fonction de taux de compression de codage par longueur de plage de résultats des opérations OU exclusif, dans lequel un résultat d'une OU exclusif réalisée sur le sous-bloc de données stocké et le premier sous-bloc de données a un taux de compression de codage par longueur de plage le plus petit.

6. Procédé (300) selon l'une quelconque des revendications 1 à 3, dans lequel la sélection (S308) d'un sous-bloc de données représentatif du premier sous-bloc de données comprend : la réalisation d'une opération OU exclusif sur un premier sous-bloc de données sur deux, et la sélection d'un premier sous-bloc de données en tant que sous-bloc de données représentatif en fonction de taux de compression de codage par longueur de plage de résultats des opérations OU exclusif, dans lequel un résultat d'une OU exclusif réalisée sur le premier sous-bloc de données et un autre premier sous-bloc de données a un taux de compression de codage par longueur de plage le plus petit.

7. Procédé selon l'une quelconque des revendications 1 à 6, avant la division d'un bloc de données à stocker (402) en N sous-blocs de données à stocker de taille égale, comprenant en outre :
l'extraction d'un échantillon depuis des données à stocker, la détermination séparée d'un taux de compression de stockage, d'une vitesse de stockage et d'une vitesse de lecture de l'échantillon en fonction de différentes tailles de sous-blocs de données à stocker, et la détermination d'une valeur de N en fonction d'une taille d'un sous-bloc de données avec un taux de compression de stockage le plus petit si la vitesse de stockage et la vitesse de lecture satisfont à une condition de contrainte, dans lequel la condition de contrainte est que la vitesse de stockage est supérieure ou égale à un premier seuil prédéfini, et que la vitesse de lecture est supérieure ou égale à un second seuil prédéfini.

8. Appareil de stockage de données (108, 600), comprenant :
une unité de division, configurée pour diviser un bloc de données à stocker (402) en N sous-blocs de données à stocker de taille égale, dans laquelle les N sous-blocs de données à stocker correspondent à N identifiants d'emplacement, chaque sous-bloc de données à stocker correspond à un identifiant d'emplacement, et N est un nombre entier positif supérieur à 1 ;
une unité de sélection, configurée pour sélectionner un parmi au moins deux blocs de données de comparaison stockés en tant que bloc de données de référence (404), dans laquelle le bloc de données de référence comprend N sous-blocs de données de référence, les N sous-blocs de données de référence correspondent aux N identifiants d'emplacement, et chaque sous-bloc de données de référence correspond à un identifiant d'emplacement ;
une unité de comparaison (606), configurée pour : comparer un sous-bloc de données à stocker correspondant à un i^{ème} identifiant d'emplacement et un sous-bloc de données de référence correspondant au i^{ème} identifiant d'emplacement, et déterminer un premier sous-bloc de données dans les N sous-blocs de données à stocker, dans laquelle i est un nombre entier positif progressivement croissant de 1 à N, et le premier sous-bloc de données est un sous-bloc de données à stocker différent d'un sous-bloc de données de référence comparé, dans lequel l'unité de sélection (604) est en outre configurée pour sélectionner un sous-bloc de données représentatif du premier sous-bloc de données ;
une unité de calcul (608), configurée pour réaliser une opération OU exclusif sur des données du premier sous-bloc de données et des données du sous-bloc de données représentatif ; et
une unité de compression (610), configurée pour: compresser un résultat de l'opération OU exclusif, et stocker un résultat de compression et des informations d'emplacement du premier sous-bloc de données,
**caractérisé en ce que** la compression d'un résultat de l'opération OU exclusif est implémentée au moyen d'un codage par longueur de plage, et le fait que l'unité de sélection est configurée pour sélectionner un sous-bloc de données représentatif du premier sous-bloc de données comprend : l'unité de sélection est configurée pour : réaliser une opération OU exclusif sur un premier sous-bloc de données sur deux en utilisant une unité OU exclusif, et sélectionner un premier sous-bloc de données en tant que sous-bloc de données représentatif en fonction de taux de compression de codage par longueur de plage de résultats des opérations OU exclusif, où un résultat d'une OU exclusif réalisée sur le premier sous-bloc de données et un autre premier sous-bloc de données a un taux de compression de codage par longueur de plage le plus petit,
dans lequel le bloc de données à stocker comporte M premiers sous-blocs de données, dans lequel les M premiers sous-blocs de données sont numérotés de 1 à M en fonction d'une suite d'emplacements dans le bloc de données à stocker, et une opération OU exclusif est réalisée séparément sur un M premier sous-bloc de données sur deux,
dans lequel, dans le codage par longueur de plage, un codage de compression est réalisé en enregistrant un caractère qui apparaît en continu et un nombre de fois où le caractère apparaît en continu, et dans lequel un taux de compression de codage par longueur de plage d'un résultat d'une OU exclusif réalisée sur chaque premier sous-bloc de données et un autre premier sous-bloc de données est déterminé en calculant une taille d'un espace de compression généré par la réalisation d'un codage par longueur de plage sur le caractère qui apparaît en continu dans le résultat OU exclusif.

9. Appareil selon la revendication 8, dans lequel l'unité de comparaison (606) est plus particulièrement configurée pour comparer une empreinte digitale du sous-bloc de données à stocker correspondant au i^{ème} identifiant d'emplacement et une empreinte digitale du sous-bloc de données de référence correspondant au i^{ème} identifiant d'emplacement, dans lequel, si les empreintes digitales sont identiques, cela indique que le sous-bloc de données à stocker est le même que le sous-bloc de données de référence, ou si les empreintes digitales sont différentes, cela indique que le sous-bloc de données à stocker est différent du sous-bloc de données de référence.

10. Appareil selon la revendication 8 ou 9, dans lequel, lors de la sélection d'un parmi au moins deux blocs de données de comparaison stockés en tant que bloc de données de référence, l'unité de sélection est en outre configurée pour sélectionner un bloc de données stocké, qui comprend une quantité la plus grande de sous-blocs de données identiques avec le bloc de données à stocker (402), à partir des au moins deux blocs de données de comparaison en tant que bloc de données de référence.

11. Appareil selon l'une quelconque des revendications 8 à 10, dans lequel le fait que l'unité de sélection (604) est configurée pour sélectionner un sous-bloc de données représentatif du premier sous-bloc de données comprend : l'unité de sélection est configurée pour sélectionner un sous-bloc de données de référence qui correspond à un identifiant d'emplacement qui correspond à chaque premier sous-bloc de données en tant que sous-bloc de données représentatif du premier sous-bloc de données.

12. Appareil selon l'une quelconque des revendications 8 à 10, dans lequel le fait que l'unité de sélection (604) est configurée pour sélectionner un sous-bloc de données représentatif du premier sous-bloc de données comprend : l'unité de sélection est configurée pour : réaliser séparément une opération OU exclusif sur le premier sous-bloc de données et au moins deux sous-blocs de données stockés en utilisant une unité OU exclusif, et sélectionner un sous-bloc de données stocké en tant que sous-bloc de données représentatif en fonction de taux de compression de codage par longueur de plage de résultats des opérations OU exclusif, dans lequel un résultat d'une OU exclusif réalisée sur le sous-bloc de données stocké et le premier sous-bloc de données a un taux de compression de codage par longueur de plage le plus petit.

13. Appareil selon l'une quelconque des revendications 8 à 10, dans lequel le fait que l'unité de sélection (604) est configurée pour sélectionner un sous-bloc de données représentatif du premier sous-bloc de données comprend : l'unité de sélection est configurée pour : réaliser une opération OU exclusif sur un premier sous-bloc de données sur deux en utilisant l'unité OU exclusif, et sélectionner un premier sous-bloc de données en tant que sous-bloc de données représentatif en fonction de taux de compression de codage par longueur de plage de résultats des opérations OU exclusif, dans lequel un résultat d'une OU exclusif réalisée sur le premier sous-bloc de données et un autre premier sous-bloc de données a un taux de compression de codage par longueur de plage le plus petit.

14. Appareil selon l'une quelconque des revendications 8 à 13, dans lequel l'unité de sélection (604) est en outre configurée pour :
extraire un échantillon depuis des données à stocker, déterminer séparément un taux de compression de stockage, une vitesse de stockage et une vitesse de lecture de l'échantillon en fonction de différentes tailles de sous-blocs de données à stocker, et déterminer une valeur de N en fonction d'une taille d'un sous-bloc de données avec un taux de compression de stockage le plus petit si la vitesse de stockage et la vitesse de lecture satisfont à une condition de contrainte, dans lequel la condition de contrainte est que la vitesse de stockage est supérieure ou égale à un premier seuil prédéfini, et la vitesse de lecture est supérieure ou égale à un second seuil prédéfini.

15. Support lisible par ordinateur, comprenant une instruction exécutable par ordinateur, dans lequel, lorsqu'un processeur (202) d'un ordinateur exécute l'instruction exécutable par ordinateur, l'ordinateur exécute le procédé selon l'une quelconque des revendications 1 à 7.
